# EUROPEAN PATENT SPECIFICATION

(11) **EP 0 914 263 B1**
(45) Date of publication and mention of the grant of the patent: **08.05.2002**
(21) Application number: 97932024.9
(22) Date of filing: 10.07.1997
(51) Int. Cl.: F16H 3/72

(54) **HIGH-POWERED POWERTRAINS USING WHEEL AND AXLE POTENTIAL ENERGY**
HOCHLEISTUNGSANTRIEBSSTRANG DER RAD- UND WELLENTRÄGHEITSMOMENTE NUTZT
GROUPES MOTOPROPULSEURS HAUTE PUISSANCE A RECUPERATION D'ENERGIE DES ROUES ET ESSIEUX

(30) Priority: 12.07.1996 KR 2806896
(43) Date of publication of application: 12.05.1999
(73) Proprietor: PAEK, Un Kil, Eunpyong-ku, Seoul 122-837 (KR)
(72) Inventor: PAEK, Un Kil, Eunpyong-ku, Seoul 122-837 (KR)
(74) Representative: Grünecker, Kinkeldey, Stockmair & Schwanhäusser Anwaltssozietät
(86) International application number: KR9700136
(87) International publication number: WO9802325

(56) References cited:
- WO-A-92/07200
- AU-A- 4 475 289
- FR-A- 2 643 326
- FR-A- 2 649 066

## Description

### Technical Field

This invention relates to all types of power transmissions, that is, powertrains of all kinds of machinery, specifically of electric cars, internal combustion engine cars, and bicycles: each incorporating a plurality of movable pulleys as levers mounted free on shafts and of links as effortless traction means each coupled tangentially from shaftrims or from pulley hubs to other pulleyrims so as to provide lever means in series for serving as a multiplier of a newly-defined 'wheel and axle potential energy' when static (see the Advantage section on page 10) and for operating with an input (an external force) or a multiplicand but exerting an output many times over the input, which is the product of the multiplicand and the multiplier of the wheel and axle potential-converted kinetic energy, depending on the magnitude of a load torque, so that the powertrain may drive or brake drivewheels with the input of a fraction of the output required to meet the load torque; and incorporating freewheels-, cams-, springs-loaded clutches in conventional constant-mesh gears for performing automatic transmissions as well as for freewheeling while driving.

### Background Arts and Disclosure of Invention in Terms of Technical Problems of the Prior Arts, Their Solutions, and of the Advantageous Effects

### Electric Car

A conventional powertrain of an electric car consisted of a motoraxle/pulley, cooling fan/motoraxle, a variable resistance electro-magnetic clutch/pulley, and propellershaft, all driven by a number of batteries stored in the car and recharged. The motoraxle/pulley used a small pulley fixed to the motoraxle through the hub and a big pulley fixed to a driven shaft with a belt run inbetween so as to allow the small pulley to rotate frequently with as little motor output as possible, but driving the big pulley through the belt a little slowly but more easily. This combination, however, caused the motoraxle to twist the small pulleyhub to rotate the pulley contrary to the principle of wheel and axle, instead of to draw the pulley by rim from the axle rim through a link. The improper combination required more use of an electric power (an input) to produce an output of around seventy percent of the power (the input) used. A conventional generator axle/pulley in an internal combustion engine car used. also a small pulley fixed to the axle and a big pulley fixed to the crankjournal through the pulleyhub with a belt run so as to allow the big pulley to rotate the small pulley more often for higher electric power production. This combination also caused the crankjournal to twist the pulleyhub to rotate the big pulley, thus requiring much more effort, as stated above.

This invention, however, aims to provide the motoraxle or the crankjournal with a small or a big pulley, or a plurality of movable pulleys, as necessary, being mounted free thereon and with an elastic traction rod, or elastic traction rods each, being connected tangentially from the axle rim or from pulley hub bosses to other pulley rims, and so on (in other words, traction pulleys connected in series) for serving as lever means in series for facilitating the rotation of the axle or the crankjournal more easily by drawing other pulleys by rims from hubbosses through traction rods consecutively in accordance with the principle of wheel and axle.

The motoraxle/cooling fan (motoraxle/cooling fan, generator axle/cooling fan, or axle/propellers of aeroplanes or of helicopters, or screws of ships) consisted of a motoraxle, a fanhub, and two or more blades projecting vertically from the hub in opposite directions. The vertical projections of the blades caused the motoraxle to twist one ends of the blades to rotate the fan, making the entire surface of the radially long blades push forward the air in the face at the same time, thus allowing the portion of the blades near the axle to plough slowly while the portion at the long, open ends of the blades to plough alone through the airspace much, much faster than the other end, bringing about violent vibrations and noises, and requiring much more effort.

This invention, however, aims to provide a cooling fan with blades rather projecting, like traction rods, in all directions from the fanhub at an incline of some forty degrees forward from the inverse tangent of the fanhub boss so that the axle may rotate, drawing the blades slantly, thus pushing aside the air to blow the same strong wind or to ride over the same air as the prior arts do, with little efforts to be exerted by the fanhub boss (short radius) plus some more efforts of pushing aside the air slantly, whereby the fan makes much less vibrations and noises, as compared with the prior arts.

The variable resistance electro-magnetic (VREM) clutch/pulley or VREM clutch/shaft comprised an excited-coil drive member with the excited coil core projecting vertically from the drive member hub fixed to a driveshaft and a shorting-coil pole projecting in line with the excited coil core. The vertical projection of the excited coil core caused the drive member to twist one ends of the coil cores to rotate the drive member.

The invention aims to provide the excited coil drive member with an excited coil core projecting tangentially from the drive member hub so as to allow the drive member to rotate, drawing the coil core as if to draw a traction rod in a straight line for easy attraction.

The propellershaft was coupled from the mainshaft of a transmission to a differential gear to transmit the drive power to the rearaxle for driving rearwheels.

This invention is to incorporate lever means in the shaft to drive it with much less efforts than required. The propellershaft will be divided near the differential gear into a drive member and a driven member to transmit power through traction pulleys. A plurality of traction pulleys will be mounted free on the drive member with the traction rods connected to other pulley rims. A free joint pulley with a hubbore having a key hole on one side and a female-threaded bore on the other will be half inserted on and keyed to the end of the driven member, the male-threaded end of the drive member be screwed into the female-threaded bore of the free joint pulley a little loosely so as not to transmit the power to the driven member directly, the traction rod of the last traction pulley be connected to the free joint pulley rim, and the first-inserted traction pulley be keyed to the drive member, so as to provide lever means in series for facilitating the rotation of the drive member much more easily.

### Internal Combustion Engine Car

Conventional internal combustion engine cars consisted of piston connecting rods/crankshaft, crankjournal/flywheel, constant-mesh type gear transmission, propellershaft, rearaxle/brake-drum, and cooling fan/generatoraxle.

An improved piston connecting rods/crankshaft, which was developed by me and specified in Korean Patent No.109842, 30 December 1996 (KR Publication No.96-10263, 26.07.1996) or a related PCT Publication No. WO92/07200, 30.04.92), comprised a piston connecting rods each having a big end with a round crank pin bore in the center and a round crankpin being divided from ○ into 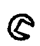 and 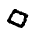 with the former portion taken off and a contract spring set being loaded between the cut-off sides of the two for allowing, in expansion strokes, the big end to dash as much as possible toward, but short of, a rotational direction by contracting the spring and sliding on the crankpin prior to pushing with the spring repelling force the crankpin toward a rotational direction; that is, at least a resultant of a faster piston speed and a little slower rotational speed of the crankshaft for smoother, strong rotation. But the crankarms of the crankshaft projected vertically from the crankjournal, still causing, in expansion strokes, the big end to push the crankpin slantly toward the crankjournal, thus meeting with resistance, making vibrations and noises, and also the crankarms to plough swiftly in the air space, making stronger vibrations and noises and also causing, in suction, compression, and exhaust strokes, the crankjournal to twist one ends of the crankarms with much effort to reciprocate the big end from the top-dead-center to the bottom-dead-center.

This invention, however, is to form a crankarm, a tangent pushrod, and a balance weight in a disc, partitioned by slit, so as to allow them to rotate without the vibrations and the noises in the airspace at high speeds and to secure the flywheel effects; to have the crankarms project laterally and tangentially from the crankjournal by slit in a width of a little less than the radius of the crankjournal to a disc rim for the big end to push it through a tangent pushrod to a full rotational direction; that is, a resultant of the expansion piston speed and the rotational speed of the crankshaft in expansion strokes, and for the crankjournal to rotate easily, drawing the crankarm tangentially, thus reciprocating the big end up and down in suction, compression,and exhaust strokes; and to have the tangent pushrod extend inversely from the open end of the crankarm to a crankpin, in a half-moon shape by slit one side and connect to a conventional crankpin so that it may stay in a rotational direction, a resultant of expansion strokes' speed of the piston and a current, rotational speed of the crankshaft and that the big end may push, in expansion strokes, the crankpin and the tangent pushrod straight to a full rotational direction to secure the maximum efficiency. A crankshaft having this type of a tangent pushrod/crankarm is also useful for changing circular motion to a to-and-fro motion.

The crankjournal/flywheel comprised a crankjournal and a flywheel connected to its hub through a flange so as to cause the journal to twist the hub of the flywheel to rotate it.

This invention is to have two traction rods project tangentially from the flange in opposite directions to the rim of the flywheel, the flange fixed to the end of the crankjournal, the flywheel mounted free and secure on the end of the journal and one ends of the traction rods connected to the rim of the flywheel so that the crankjournal may rotate easily the flywheel by drawing the two traction rods.

The constant-mesh gear type transmission comprised a mainshaft, several, different size, idle gears mounted free on the mainshaft, and clutch gears mounted on splined mainshaft, a countershaft, several different size gears on the countershaft with the sprockets meshed with those of the idle gears on the mainshaft. This mechanism required manual work, giving rise to frictions and noises in changing gear ratios.

This invention, however, is to have a different size, idle gears set mounted free on the mainshaft, transfer leversmounted on the splined mainshaft to clutch at or de-clutch from the idle gears set, different size, idle gears separately mounted free on the countershaft with the sprockets meshed with those of the idle gears on the mainshaft, and automatic clutch sets each connected between the countershaft and the countershaft gears; the automatic clutch sets each comprising freewheels, translation cams, tension springs, separate hubs in uniform sizes for causing them to clutch at or de-clutch from the countershaft gears alternately according to engine speeds and gear ratios, so that the countershaft may rotate alone at idle engine speeds without an accelerator pedal being pressed so as not to drive the countershaft gears to allow the drivewheels to freewheel by inertia or to allow the drivewheels to be braked without a foot clutch pedal being depressed while driving, it may drive alternately one of the countershaft gears at accelerating speeds for automatic transmission when the accelerator pedal is kept pressed, or that it may accelerate speeds after freewheeling when the accelerator pedal is re-pressed.

The conventional semi-floating rearaxle/brake-drum/drivewheel comprised a semi-floating rearaxle with a flange attached to the open end of the axle, the brake-drum attached to the flange via bolts, and the drivewheels attached to the flange via bolts so that the rearaxle may twist the hub of the drivewheel to rotate the drivewheel or that the brake-drum may brake the drivewheels hard by checking the hub of the drivewheels.

This invention is to have semi-floating rearaxles have a screwy boss at either open end next to the rearaxle flange, a big disc-like flange to be mounted free and secure on the screwy boss for use as a force-point pulley, and a brake-drum have four traction rods projecting in four directions tangentially from the drum hub to the rim of the big flange for drawing the rim of the big flange. The brake-drum will be attached to the conventional axle flange through the axle boss via bolts and nuts, and the big disc flange screwed on the screwy axlebos a little loosely and the open ends of the four traction rods connected to the spaced rim of the big flange via bolts and nut and drivewheels attached to the side of the big flange via bolt and nuts for complete assembly, so that the rearaxle may rotate the drivewheels easily by drawing the rim of the big flange through the traction rods, and that the brake-drum may brake the drivewheels easily by checking the rim of the big flange through the traction rods.

### Bicycle

Conventional bicycles consisted of a pedal crankshaft/chain-gear, a chain, and freegears/rearwheel. Left and right crank arms just projected in such a limited radius vertically from the crankjournal that a bicyclist had to press the pedal hard at the top-dead-center toward the rotational direction. And the inner race of the ratchetwheel loaded in the freegears was just fixed to the rearwheel hub through a spindle so that the freegears should rotate the rearwheel by twisting its hub hard.

From FR 2 643 326 A is known a bicycle with adjustable paddle arm lenghts to allow different transmission ratios.

This invention is to have left and right pedal crankarms each extend longer enough not to touch the ground and a frontwheel mudguard from the crankjournal, and tangent pushrod each extend from the open end of the elongated crankarms backward to where conventional crankarms ended, and pedals each mounted on the ends of the pushrods so that the bicyclist may press easily the pedal toward a rotational direction, pushing the end of the longer radius of the crankshaft; the chaingear have a wide hubboss and hubbore for resting free and secure on the crankjournal and supporting a lever set; the lever set contain a 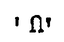 shaped, rigid force-point/elastic traction rod with a leverhub boss at one end, and a separate 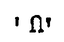 shaped elastic traction/rigid force-point rod project tangentially from the lever hub boss on the other side to as long as the crankarm and curve back toward the crankjournal to fasten the curved rod to the side of the chaingear; the chaingear mounted free and secure on the crankjournal through chaingear hubbore not to receive the pedal power, the lever set mounted free on the chaingear hub boss, the force-point rod of the separate traction/force-point rod attached to the sideface of the chaingear, the open end of the traction rod attached to the hub of the right crankarm fixed to the end of the crankjournal, and the left curved crank arm attached to the left, open end of the crankjournal, so as to provide the crankshaft with curved crankarms, leverset of two levers, and the chaingear for facilitating a bicyclist's pedaling easily by pushing the end of the elongated crankarms; and the inner race of the ratchetwheel have a flange with spaced traction spoke bores and balance spoke bores along the rim and the inner race screwed a little loosely but securely on the spindle of the rearwheel not to transmit power directly to the spindle, and to have four traction spokes connected tangentially in inverse direction from the traction spoke bores of the flange to the rim of the rearwheel, and two balance spokes connected forward from the two balance spoke bores to the rim of the rearwheel so as to provide the inner race of the ratchetwheel with the four traction spokes for rotating much easily by drawing the rearwheel by rim through the traction spokes, while the inner race combined with the two balance spokes for holding the rearwheel in balance and rotating together with the rearwheel.

### The Advantages of the Invention

It is necessary to discuss here in detail the 'wheel and axle potential energy' newly defined and named as such by me for the first time.

Transmission elements such as shafts, crankshafts, gears, pulleys, wheels, etc., can be so combined and interconnected as to rotate other elements by drawing or pushing by rims from hubbosses through links (traction rods) to secure the maximum of efficiency with the minimum of efforts in accordance with the principle of wheel and axle. This arrangement will provide lever means in series in the powertrain for being a multiplier of 'a wheel and axle potential energy' when static and for operating with an input (an external force) or a multiplicand but exerting an output many times over the input, which will be the product of the multiplicand and the multiplier of the wheel and axle potential-converted kinetic energy to meet a load torque. The output is the product of a multiplicand (an input) and the multiplier of one pulley's two radial ratio (2 : 1 = 2) other pulley's two radial ratio (2 : 1 = 2), and more other pulley's two radial ratio (2 : 1 = 2): 1 (multiplicand) x 8 (2 x 2 x 2, multiplier), The augumentation of potential energy will be gained by adding more movable traction pulleys to the combination or by varying radial ratios.

When some movable traction pulleys, which comprise pulleys and elastic traction rods projecting tangentially from the hub bosses to next traction pulleyrims, are applied to a motoraxle and a generatoraxle, the last traction pulley will rotate, exerting an output many times greater than the motor output, thus enabling to rotate the rotor of a large capacity generator for high voltage electric production. As a result the potential energy will help any machines provided with a motor, traction pulleys, and a generator to produce a self-supporting electric energy for their own operations.

The following is the detailed description of the combination of transmission elements for providing a multiplier of a wheel and axle potential energy. To this end a plurality of movable pulleys (levers) with the hubboss regarded as a small pulley or as a small radius and the pulleyrim as a big pulley or as a big radius will be mounted free on an axle as if to rest on a fulcrum, and the first pulley fixed to the axle through the hub to rotate with the axle; and a plurality of elastic traction rods is coupled tangentially from one pulley hubboss to next pulleyrims (as if a string were wound on either rim tightly) and so on to serve as effortless traction means, so that one pulley may rotate other pulley with leverage by drawing by rim from the hubboss through the traction rod one after another, and the last pulley will be coupled to other driven gears through sprockets, belts, or to the last driven pulley fixed to a driven shaft. The multiplier of the potential energy is calculated by a ratio (2 to 1) of two radii of a pulley rim and hub times a ratio of two radii of next pulley rim and hub, and so on.

It is so far known that the principle of a wheel and axle has only such a limited theory as 'there is gain in force, but there is loss in distance; therefore, there is no gain in the moment of work (torque), so that no academic reserch papers of any kinds have ever suggested a potential energy to be produced by a combination of two or more movable pulleys in series. As a matter of fact, there is gain in force, and there is no loss in distance; therefore there is gain in the moment of work, too, provided that two or more movable pulleys are to be mounted free on a shaft and interconnected so as to rotate otherpulleys by drawing by rim tangentially from hubboss through links.This gain in force or a succesive gain in force has been defined as 'a potential energy' and named as 'wheel and axle potential energy' by this inventor for the first time.

Better understanding of the object and advantages of the invention needs to deal with the relationship of the radial ratios of big and small pulleys fixed to an axle, and the relationship between an external force and the torque, considering from the principle of wheel and axle; radial ratio of the big and small gears fixed to two separate shafts with the sprockets meshed, and the relationship between the external force and the torque of the pulleys; the radial ratio of the small and big pulleys being mounted free on an axle and so coupled each other so that the small pulley may rotate the big pulley, drawing by rim, and the relationship between the external force and the torque; efficient traction means; the related formula for a conventional geartrain; and related formula for a new traction pulleytrain, on which calculations of the potential energy are based.

The combinations of pulleys and axles are classified into three for different purposes. The first one serves as a crankshaft or as a driven member like a lever, the second one does as a transmission for changing speeds; and the third one, which is novel, will serve as levers in series for operating with an input, a fraction of an output, but exerting an output many times over the input by the multiplier of a wheel and axle potential energy to meet a load torque.

The first combination consisting of an axle and a pulley with a hubboss and a big rim mounted on and fixed to the axle through the hubboss makes it easier, by the ratio of the two pulley radii, to turn the axle by pushing the big pulley rim than by pushing the small pulley rim in accord with the principle of wheel and axle. The related formula for the principle is: W (weight or force) x r (small pulley rim) = F (force) x R (big pulley rim) = T (work or torque). This combination, however, failed to comply with this principle, because a big pulley was just mounted rigidly on a shaft so as to cause the driveshaft to rotate the pulley by twisting the pulley hub. In other word the pulley is driven by an external force applied to the hub, instead of to the rim.

The second combination for a conventional transmission comprised a big gear fixed to a shaft and a small gear fixed to another shaft with either sprockets meshed constantly so as to cause the big gear to rotate slowly but to rotate the small gear more often by the ratio of the two radii. This needs an identical external force to be applied to either sprockets for changing speeds and for changing outputs as well. And a low speed gear consisting of a small gear meshed with a big gear should begin to be rotated at the start, as the former rotates faster than the latter with the same force but with more torque momentum on the latter, and a high speed gear comprising a big gear meshed with a small gear can be driven later by the same ) force plus the enertia in force to accelerate speeds and to promote the outputs.

The automatic gear type transmission introduced here has complied with this principle. The clutches containing freewheels loading each translation cams and tension springs, self adjustable by a certain frictional pressure, are each connected between a countershaft through their hubs and the countershaft gears by the sides of the gears through the outer races of the freewheels, so that while the countershaft is rotating, the drive members of the cams may not make or make access to the driven members, press them hard, slide them over, or reverse them with an identical pressure on the driven members, depending on engine speeds by an accelerator pedal and gear ratios. The drive members of the cams are rotating, drawing the inner races through the tension springs not extended at slow, idling engine speeds, but they make access to the driven members, as the tension springs are extended by an accelerator pedal being pressed, pressing the driven members hard, and sliding them over except the drive member of low speed gear at the start, which alone can keep pushing the driven member with the same pressure, speeding up, thus allowing the second gear to take over, etc., and freewheeling by inertia when the accelerator pedal released.

The third combination for serving as a multiplier of a wheel and axle potential energy comprises a flange or a small pulley for use as a short radius and a big pulley as a big radius being separately mounted free on an axle with the flange fixed to the axle through hubboss, and an elastic traction rod coupled tangentially from the rim of the flange to a point of the rim of the big pulley so that the axle may rotate the big pulley by drawing by rim through the traction rod, or comprises two pulleys each consisting of a small wheel (a hubboss) and a big wheel (a pulley rim) being mounted free on an axle and a traction rod being coupled tangentially from the small wheel (hubboss) of the first pulley to a point of the rim of the big wheel of the next pulley so as to provide lever means in series for performing progressive leverage with a little force, thus exerting an output many times greater than the input by the multiplier of one pulley's two radial ratio times other pulley's two radial ratio.

The latter combination above is the incorporation of the first and the second combinations above. The former causes the small wheel and the big wheel to turn around once with an identical power applied either end of the rims of the two pulleys but with the torque incrased by a ratio of the two radii on the big pulley; while the latter causes the two same pulleys to turn around once with a little external force applied to the first pulley rim but to cause the second pulley to be turned with the force multiplied by a ratio of the two radii of the first pulley.

Thus, a pulley integrated with a traction rod is here called a traction pulley. A plurality of traction pulleys in series is called 'a traction pulleytrain.' The related formula for the traction pulleytrain is somewhat like the related formula for a geartrain, but it is not for producing a gear ratio but for producing a multiplier of the wheel and axle potential energy to be applied to an input (an external force received) or a multiplicand.

If a traction pulley has a radius for dual uses instead of two different radii as in the case of a lever, the identical figure of a radius will be used as denominator and numerator in the formula. Suppose for example that three traction pulleys each have a big radius and a small radius with a ratio of 2 to 1 and an indication by a, b, c, d, e, and f in order. Then the formula for a conventional geartrain is: F/W = b/a x d/c x f/e = 1/2 x 1/2 x 1/2 = 1/8 or 8F = 1W. But the formula for traction pulleytrain with the last pulley (a drivewheel) exerting an output at a big radius will require the figure of that radius to be used as the denominator and also as the numerator for the radial ratio calculation, which follows: F/W = b/a x d/c x e*/e = 1/2 x 1/2 x 2*/2 = 1/4 or 4F = 1W, or F : W = 1 : 4. F of 1 at 'a' will increase to # of 4 (four-fold) at 'e'. This would mean that the pulleytrain will exert a four-fold power (W) at (e) with an input (F) of 1 received at 'a'. So only one quarter (F) of a normal drivepower (an output) for this pulleytrain is needed as an input. And if the transmission power begins with a small pulley 'b', like a driveshaft, the same figure of the small radius 'b' will be used as both denominator and numerator as: F/W = b/b* x d/c x e/e = 1/1* x 1/2 x 2/2 = 1/2. 2F = 1W. This indicates that F represents an input or a multiplicand, 2 from 2F, a multiplier, and W represents an output to meet a load torque.

Conventional fan blades, propeller blades of aeroplanes and helicopters, screws of ships should properly project a little forward tangentially from axle rims like a traction rod of a traction pulley, so that the axle may rotate, drawing one ends of the blades slantly, still blowing the wind as conventional blades do, and propeller blades should be properly wider and flexible in the rear like birds' wings so as to plough through the air with as little vibrations and noises as possible. This feature will make a fan work well with a little power applied to the axle of a short radius, thus saving much fuel and also making little vibrations and noises. In a bicycle pedal mechanism pedal crankarms should be elongated as much as allowable for easy push by a longer force-point of a lever and two tangential pushrods should be curved and extended from the open end of the crankarms backward to a point where conventional crankarms ended and pedals mounted thereon so as to facilitate the pedaling of the bicycle.

Further objects and advantages will become apparent from a serious consideration of drawings and ensuing description of it.

### Brief Description of Drawings

Fig. 1 shows a sectional view of a high-powered powertrain of an electric car, the first embodiment, according to the invention.
Fig. 2 shows a perspective view of motoraxle/traction pulleys, variable resistance electro-magnetic clutches, and generator axle/traction pulleys.
Fig. 3 shows a plane view of a motoraxle/cooling fan.
Fig. 4 shows a perspective view of drive propellerahaft/traction pulleys/free joint pulley/driven propellershaft.
Fig. 5 shows a sectional view of a high-powered powertrain of an internal combustion engine car, the second embodiment, according to the invention.
Fig. 6 shows a sideview of engine connecting rod/crankshaft.
Fig. 7 shows frond and perspective views of connecting rod big end/crankshaft.
Fig. 8 shows a perspective view of crankjournal/flywheel.
Fig. 9 shows an exploded view of crankjournal/flywheel.
Fig. 10 shows a sectional view of automatic different-size gear type transmission.
Fig. 11 shows a frontview and an exploded view of automatic, different-size gear type transmission.
Fig. 12 shows a perspective view of semi-floating rearaxle/traction brake-drum/drivewheels.
Fig. 13 shows a front view of a high-powered powertrain of a bicycle, the third embodiment, according to the invention.
Fig. 14 shows an exploded view of pedal crankshaft/chaingear.
Fig. 15 shows a sectional view of free gears/rearwheel.
Fig. 16 shows a front view of the inner race of a ratchetwheel and traction spokes and balance spokes.

### Drawing Reference Numerals:

### Embodiment 1, Electric Car

| Left, right motoraxles(10,10')/left, right traction pulleys(11, 11')/left, right variable electro-magnetic clutches(27,27')/ right generatoraxle(43'), or /drive propellershaft(48), and cooling fan(22)/motoraxle(10) | | | |
|---|---|---|---|
| 10,10' | left, right motoraxles | 11,11' | left, right tractionpulley |
| 12,12' | left, right puleyhubboss | 13,13' | left, right traction rods |
| 14,14' | left,right tractionpins | 15,15' | left,right tract.pin bore |
| 16 | screw bore | 17 | screw |
| 19 | force-point pulley | 20 | key hole |
| 21 | key | 22 | cooling fan |
| 23 | fan hubboss | 24 | blade |
| 25 | key hole | 26 | key |
| 27,27' | left,right VREM clutchs | 28,28' | left,right drive members |
| 29,29' | left,right ex.coil core | 30,30' | left,right force-p pulley |
| 31,31' | left,right tract pinbore | 34,34' | left,right driven members |
| 35 | left driven member traction rod/pin | | |
| 36 | traction pin bore of 30 | 37 | screw bore |
| 38 | screw | 39 | axle splitpin bore |
| 40 | split pin | 41 | key hole |
| 42 | key | 43,43' | left,right generatoraxle |
| 44,44' | left,right sh coil pole | 46 | key hole |
| 47 | key | 48 | drive propellershaft |

| Drive propellershaft(48)/right traction pulleys(56)/free joint pulley(51)/driven propellershaft(50) | | | |
|---|---|---|---|
| 48 | drive propellershaft | 49 | male-threaded end |
| 50 | driven propellershaft | 51 | free joint pulley |
| 52 | hub boss | 53 | unthreaded bore |
| 54 | female-threaded bore | 55 | traction pin bore |
| 56 | right traction pulley | 57 | traction pin |
| 58 | screw | 59 | screw bore |
| 60 | key | 61 | key hole |

### Embodiment 2, Internal Combustion (IC) Engine Car

| Connecting rod(70)/crankshaft(71) | | | |
|---|---|---|---|
| 70 | connecting rod | 71 | crankshaft |
| 72 | big end | 73 | round bearing housing |
| 74 | spring set | 75 | crankjournal |
| 76 | crankarm | 77 | tangent pushrod |
| 78 | crankpin | 79 | balance weight |
| 80 | tap bolt | 81 | nut |

| Crankjournal(75)/flywheel(90) | | | |
|---|---|---|---|
| 75 | crankjournal | 90 | flywheel |
| 91 | threaded hub bore | 92 | traction rod groove |
| 93 | traction pin bore | 94 | male-threaded journal boss |
| 95 | pilot bearing housing | 96 | journal flange |
| 97 | traction rod | 98 | traction pin |
| 99 | key hole | 100 | key |

| Automatic different-size geartype transmission(101) | | | |
|---|---|---|---|
| 101 | auto geartype transmis | 102 | mainshaft,diff. size gears |
| 103 | mainshaft gear hub | 104,104' | shiftshafts |
| 105 | mainshaft eng brakgear | 106 | spline |
| 107 | driven clutch gear | 108 | drive clutch gear |
| 109 | mainshaft reverse gear | 110 | count.shaft eng. brakegear |
| 111 | count.shaft reverse gear | 112 | count.shaft diff-size gears |
| 113 | countershaft | 114 | clutch set |
| 115 | outer race | 116 | inner race |
| 117 | hub | 118 | roller retainer |
| 119 | roller retainer housing | 120,120' | upper,lower driven cam member housing |
| 121,121' | pin boss bores | | |
| 122,122' | upper,lower driven cam members | | |
| 123,123' | pin bores | 124,124' | bushings |
| 125,125' | pins | 126,126' | snap rings |
| 127,127' | other ends | 128,128' | small tension spring grooves |
| 129,129' | small spring pegs | | |
| 130 | small tension spring | 131 | drive cam member |
| 132 | drive cam member groove | 133 | screw bore |
| 134 | screw | 135 | big tension spring |
| 136 | big tens.spring groove | 137 | spring peg |
| 138 | hub spring groove | 139 | hub spring peg |
| 140 | flange | 141 | key (flange) |
| 142 | key hole (flange) | 143 | lock pin |
| 144 | lock pin bore | 145 | key(countershaft) |
| 146 | key hole(countershaft) | | |

| Semi-floating rearaxle(150)/traction brake-drum(151)/drivewheels | | | |
|---|---|---|---|
| 150 | semi-floating rearaxle | 151 | traction brake drum |
| 152 | brakeshoe | 153 | drivewheel |
| 154 | rearaxle flange | 155 | free joint flange |
| 156 | rearaxle boss | 157 | hub boss of free joint |
| 158 | rim bolt bore | 159 | flange hub boltbore |
| 160 | traction rod | 161 | tractionrod bolt bore |
| 162 | female-threaded bore | 163 | drumhub bolt bore |
| 164 | drivewheel hub boltbore | 165 | force-point rim |
| 166 | short hub bolt | 167 | nut of drumhub |
| 168 | hub bolt(drivewheel hub) | 169 | nut (rim bolt) |
| 170 | traction rod bolt | 171 | washer |
| 172 | nut (drivewheel) | | |

### Embodiment 3, Bicycle

| Pedal crankshaft(180)/chaingear(185) | | | |
|---|---|---|---|
| 180 | pedal crankshaft | 181,181' | left, right crankarms |
| 182,182' | left, right pushrods | 183,183' | left, right holders |
| 184 | crank journal | 185 | chaingear |
| 186 | chaingear hubboss | 187 | chain |
| 188 | lever set | 189 | lever hubboss |
| 190 | lever hub bore | 191 | force-point rod |
| 192 | traction rod | 193 | force-point/traction rod |
| 194 | bolt bore | 195 | separate tractionrod/force point rod |
| 196 | hub bolt | | |
| 197 | nut | | |

| Free gears(200)/rearwheel(201) | | | |
|---|---|---|---|
| 200 | free gears | 201 | rearwheel |
| 202 | rearwheel spindle | 203 | ratchetwheel inner race |
| 204 | flange | 205 | traction spoke bore |
| 206 | rearwheel rim | 207 | traction spoke |
| 208 | balance spoke | 209 | balance spoke bore |
| 210 | wheelrim spoke bore | | |

### Modes for Carrying Out the Invention

### Embodiment 1, Electric Car

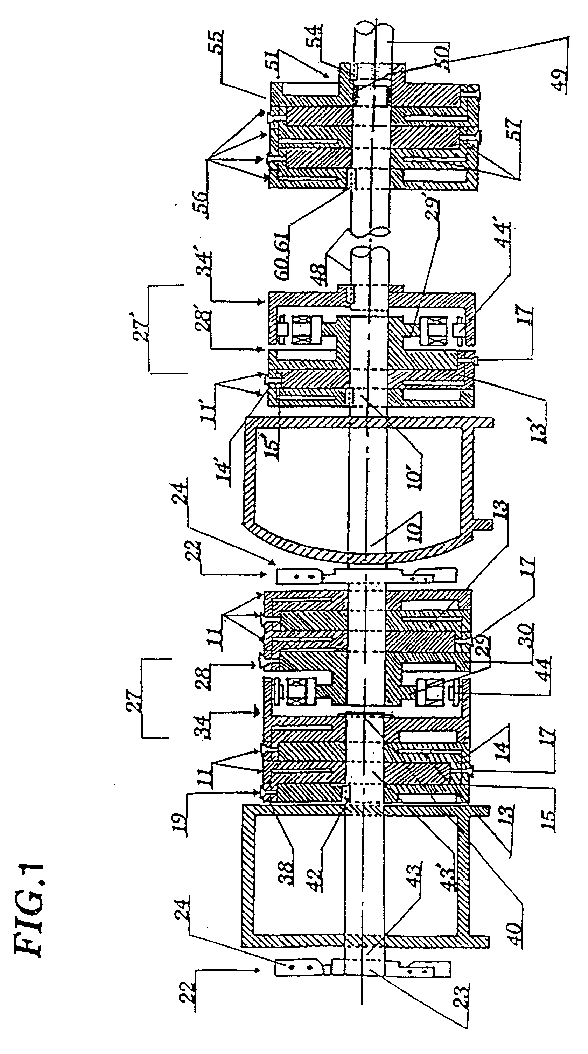

High-powered powertrain of an electric car comprises, as shown in Fig. 1, left motoraxle(10)/left traction pulleys(11)/left variable resistance electro-magnetic (VREM) clutch(27)/left traction pulleys(11)/right generatoraxle(43') for facilitating the rotation of the generator(43'); right motoraxle(10')/right traction pulleys(11')/right VREM clutch(27')/drive propellershaft(48) for facilitating the rotation of the propellershaft (48); drive propellershaft(48)/right traction pulleys(56)/free joint pulley(51)/driven propellershaft(50) for facilitating the rotation of the driven propellershaft(50); cooling fan(22)/left motoraxle(10); and cooling fan(22)/left generatoraxle(43) both for easy rotations of the fans(22).

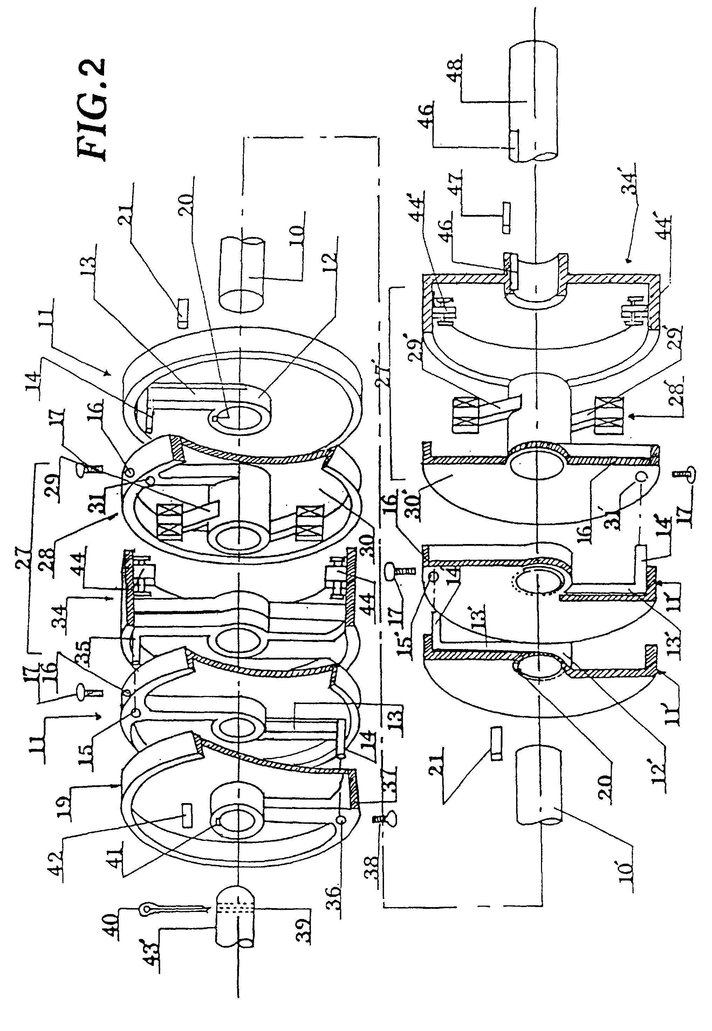

Illustrated further in Fig. 2 are the left, right motoraxles (10,10') and the right generatoraxle(43') with the left, right traction pulleys(11,11') and a force-point pulley(19) and the left, right VREM clutches(27,27') mounted free on the axles and on the drive propellershaft(48). The left, right traction pulleys(11,11') have each pulley hubbosses(12,12') for serving as a small radius or a weight point of a lever, and a radially long, circular rim for serving as a big radius or a force-point of a lever at a traction pin bore(15,15'), specifically circular for reducing air resistance and noises in speedy rotation in the airspace; and the left, right traction rods(13,13') each projecting tangentially from the pulley hubbosses(12,12') leftward or rightward to the traction pin bores(15,15') of the adjoining pulleys for serving as effortless traction means, and the traction pins(14,14') extending therefrom at right angle through the rims so as to be hooked in the traction pin bores(15,15') for drawing the rim securely for easy rotations of the traction pulleys(11,11'). The force-point pulley(19) has the same radially long and circular rim like the traction pulleys(11,11') without a traction rod and a traction pin bore(36), screw bore (37) on rim and key hole(41) in the hub.

The left, right VREM clutches(27,27') have each drive members (28,28') and driven members(34,34') for magnetic attraction. The left, right drive members(28,28') have each separately excited-coil cores(29,29') projecting tangentially from the hub bosses for facilitating the attraction of the shorting coil poles(44,44'), and force-point pulleys(30,30') each integral with the hubbosses of the drive members(28,28') with a traction pin bores(31,31') on rim for being drawn easily by rim; and the left, right driven member(34,34') have each shorting-coil poles (44,44') facing straight to the coil cores(29,29') for easy attraction; and the left driven member(34) has a traction rod/pin(35) projecting tangentially from the hubboss and curving at an angle for coupling to the rim of next traction pulley(11), and the right driven member(34') has only a hub keyhole(46) without a traction rod thereon.

The left, right traction pulleys(11,11') and the separately excited-coil drive members(28,28') will be mounted free on the left, right motoraxles(10,10') as if to rest on a fulcrum, the first-inserted traction pulleys(11,11') be keyed to the motoraxles(10,10') via key(21) and keyhole(20), and the traction pins (14,14') put into the traction pin bores(15,15';31,31') of the adjoining traction pulleys(11,11') and the force-point pulleys (30,30') and screwed via screw(17) and screw bores(16); and the force-point pulley(19), the left traction pulleys(11), and the left shorting-coil driven member(34) will be mounted free on the right generatoraxle(43') in that order with the left shorting-coil pole(44) disposed in line with the left separately excited-coil core(29), the traction pins(14,35) put into the traction pin bores(36,15) of the adjoining traction pulleys(19, 11) and joined via screws(38,17) and screw bores(37,16), and a split pin(40) put into split pin bore(39) at the end of the right generatoraxle(43') to keep it secure; the force-point pulley(19) be keyed to the generatoraxle(43') via key(42) and keyhole(41); the right shorting coil driven member(34') of the right VREM clutch(27') keyed to the drive propellershaft(48) via key(47) and key hole(46), thus completing the assembly of the motoraxles/fraction pulleys/UREM clutches/generatoraxle.

With this arrangement the left, right motoraxles(10,10') are ready to be rotated with a little electric power (input) by a battery, with the VREM clutches cut off by a regulator (not shown), and to increase its speed gradually; the motoraxles combined with the traction pulleys(11,11') and the drive members (28,28') will rotate, exerting an output many times over the input; and then the left VREM clutch(27) will be switched on to transmit the boosted output to the driven member(34) on the right generatoraxle(43') at variable speeds; the left VREM clutch(27) will operate more easily by the excited coil core (29) of the drive member(28) attracting the shorting-coil pole (44) tangentially from the hubboss; and the traction pulleys(11) and the force-point pulley(19) on the right generatoraxle(43') combined will rotate, further increasing the boosted motoroutput to rotate fully the right generatoraxle(43') for producing a higher voltage electricity, so that some of the high voltage electricity the battery will be recharged with and the remainder may be used to operate the motoraxle more strongly so as to drive not only the drive propellershaft(48) but also the generatoraxle(43'); and next the right VREM clutch(27') will be switched on to transmit the boosted motor output to the drive propellershaft(48) at variable speeds and to drive or to brake the drive propellershaft(48) easily with the output boosted through the right traction pulleys(11') and the clutch(27'), thus enabling an electric car to run with a self-supporting electricity.

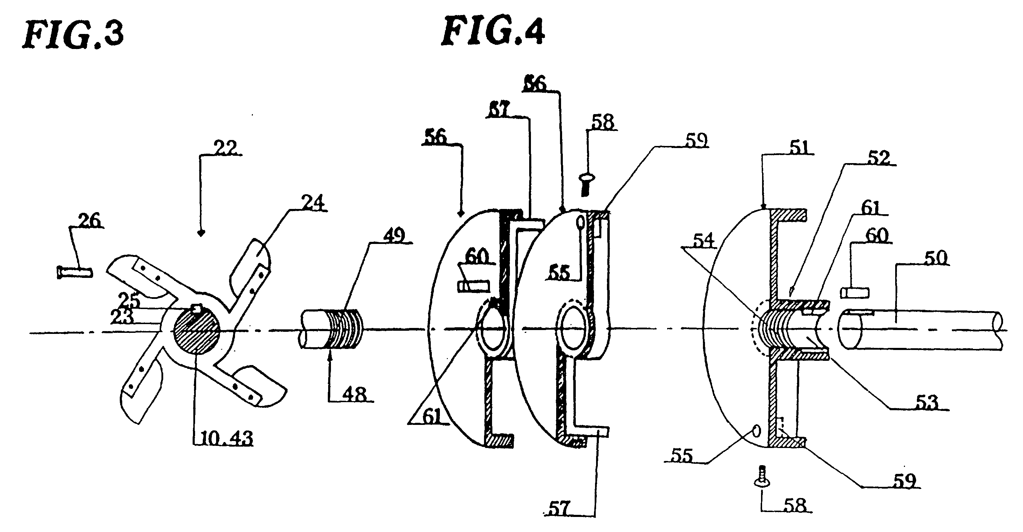

The cooling fan(22)/left motoraxle(10) or the cooling fan(22) /left generatoraxle(43) are illustrated in Figs. 1 and 3. The cooling fan(22) has a hubboss(23) and blades(24) projecting at some forty degrees forward direction from the inverse tangent of the hubboss(23) or in a less radial width of the hubboss(23) in opposite directions or in all directions, so that the axles (10,43) may rotate, drawing the blades(24) a little slantly, thus pushing the air to blow. The cooling fan(22) is keyed to the axles(10,43) via key(26) and keyhole(25) to provide fan means for blowing wind with minimum vibrations and noises with a little effort exerted by the hubboss plus some more efforts of pushing the air slantly and pushing the air forward.

The drive propellershaft(48)/right traction pulleys(56)/free joint pulley(51)/driven propellershaft(50) are shown in Figs. 1, and 4. A conventional propellershaft will be divided at a point near the differential gear into a drive propellershaft(48) and driven propellershaft(50) not to transmit power each other directly. The drive prop. shaft(48) has a male-threaded end(49) for joining free to the threaded bore(54) of the free joint pulley(51), and the driven prop. shaft(50) has a key hole(61) at the end for holding the free joint pulley(51). The free joint pulley(51) has a wide hubboss(52) with an unthreaded bore (53) and a key hole(61) at one side for joining rigidly to the driven prop. shaft(50) and with the threaded bore(54) on the other side for screwing a little loosely but securely to the male-threaded end(49) of the drive prop. shaft(48) and has a traction pin bore(55) on rim. The free joint pulley(51) will be half mounted on the end of the driven prop. shaft(50) through the unthreaded bore(53) and keyed thereto via keyhole(61) and key(60); the right traction pulleys(56) be mounted free on the drive prop. shaft(48), tne male-threaded end(49) of the drive prop. shaft(48) be screwed a little loosely into the threaded bore(54) of the free joint pulley(51), the traction pins(57) be put into the traction pin bores(55) and screwed via screws(58) and screw bores(59) one by one; and in this state the first inserted traction pulley(56) be keyed to the drive prop. shaft (48) via key(60) and keyhole(61), so as to provide the traction pulleys in series combined with the drive prop. shaft(48) and the driven prop. shaft(50) for facilitating the rotation of the drive prop. shaft much more easily.

### Embodiment 2, Internal Combustion (IC) Engine Car

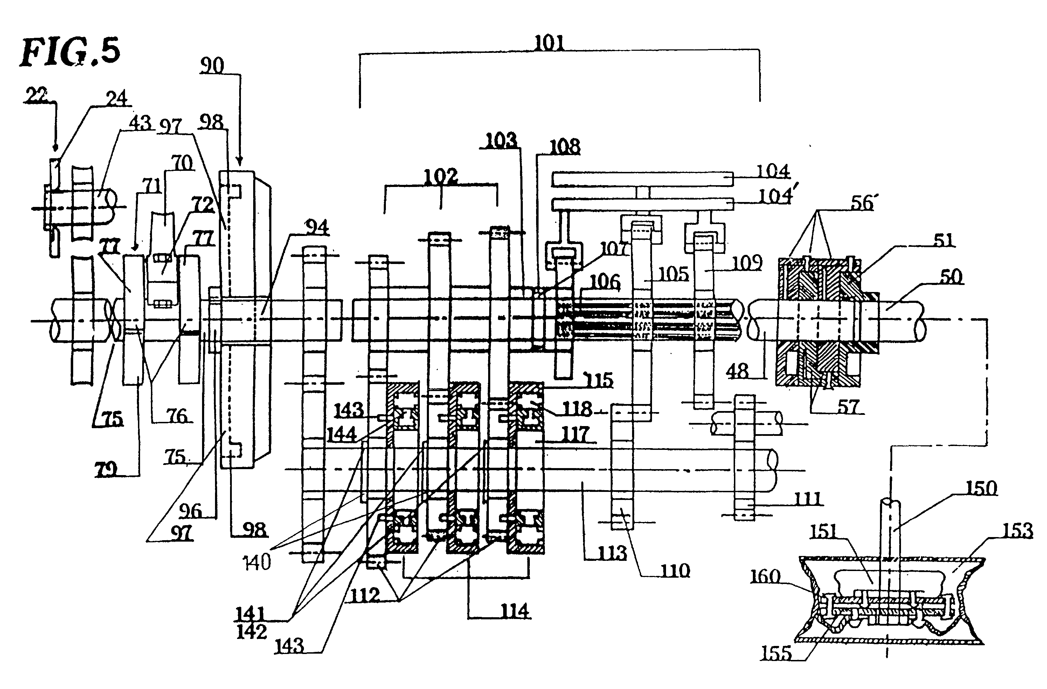

An IC engine car comprises connecting rods(70)/crankshaft(71), crankjournal(75)/flywheel(90), cooling fan(22)/generatoraxle(43') automatic, constant-mesh gear type transmission(101), drive propellershaft(48)/right traction pulleys(56)/free joint pulley (51)/driven propellershaft(50), and a semi-floating rearaxle(150) /traction brake-drum(151)/drivewheel(153) as shown in Fig. 5.

The cooling fan(22)/generatoraxle(43"), the drive propeller-shaft(48)/right traction pulleys(56)/free joint pulley(51)/driven propellershaft(50) are also shown and illustrated in Figs 1, 2, 3, and 4 and specified in Embodiment 1, electric car.

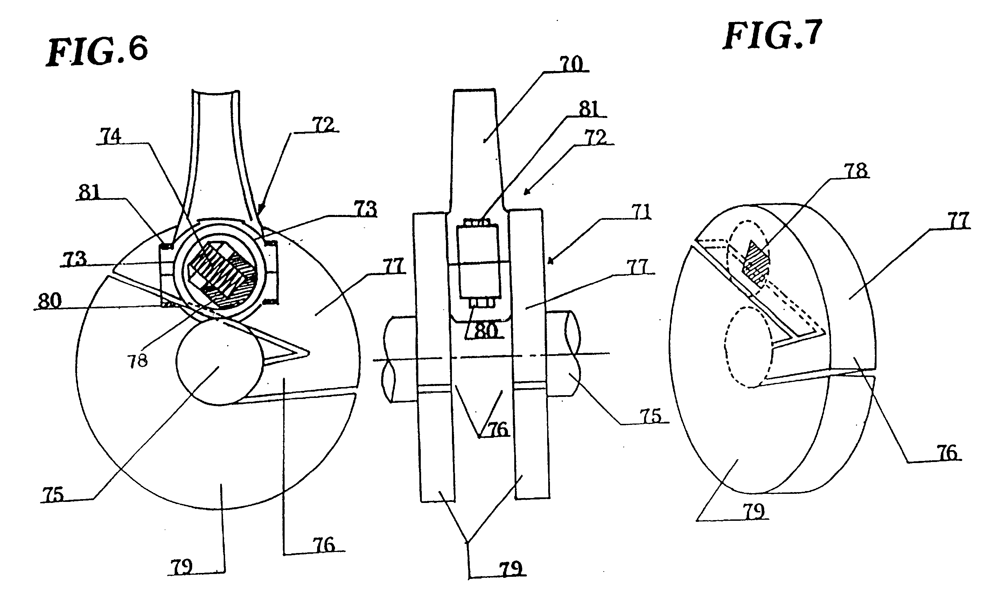

The connecting rods(70)/crankshaft(71) comprises, as shown in Figs. 5, 6, and 7, big ends(72) with a round plane bearing housing(73) in the center, and the crankshaft(71) integrated with the crankjournal(75), crankarms(76), tangent pushrods(77), spring set(74)-loaded crankpins(78), and balance weights(79). The crankarm(76), the tangent pushrod(77), and the balance weight(79) are formed in a disc, partitioned by slit, so as to allow them to rotate without vibrations and noises in the air space at high speeds and to secure flywheel effects; the crankarms(76) project laterally and tangentially from the crankjournal(75) by slit in a width of a little less than the radius of the crankjournal to a point of the disc rim at an abtuse angle of some 100 degrees forward from the crankpin(78) so that the big end(72) may push, in expansion strokes, the open end of the crankarm(76) toward a full rotational direction through the tangent pushrod(77) without resistance of the crankshaft(71), vibrations and noises, and that the crankjournal(75) may, in suction, compression, and exhaust strokes, rotate easily, drawing the crankarm tangentially, thus reciprocating the big end (72) up and down between the top-dead-center and the bottom-dead-center; the tangent pushrod(77) extend inversely from the open end of the crankarm(76) to the crankpin(78) in a half-moon shape by slit one side so as to stay in a rotational direction, a resultant of an expansion stroke speed of the piston and the current, rotational speed of the crankshaft, and to connect integrally to the crankpin(78), so that the big end(72) may, in expansion strokes, push the crankpin(78) and the tangent pushrod (77) straight toward a full rotational direction to facilitate the rotations of the crankshaft(71) most effectively. The crank pins(78) of the crankshaft(71) will be rotatably disposed in the big end(72) and joined by tapbolts(80) and nuts(81) to complete the assembly.

With this arrangement the crankshaft(71) will, in suction, compression, and exhaust strokes, rotate easily, drawing tangentially the crankarms(76), the tangent pushrods(77), and the crankpins(78) in a circle to reciprocate the big end(72) most effectively, and the big end(72) will, in expansion strokes, push the crankpins(78) and the tangent pushrods(77) straight toward the open end (a disc rim) of the crankarms(76) in a full rotational direction to rotate the crankshaft(71) most smoothly and quietly with flywheel effects.

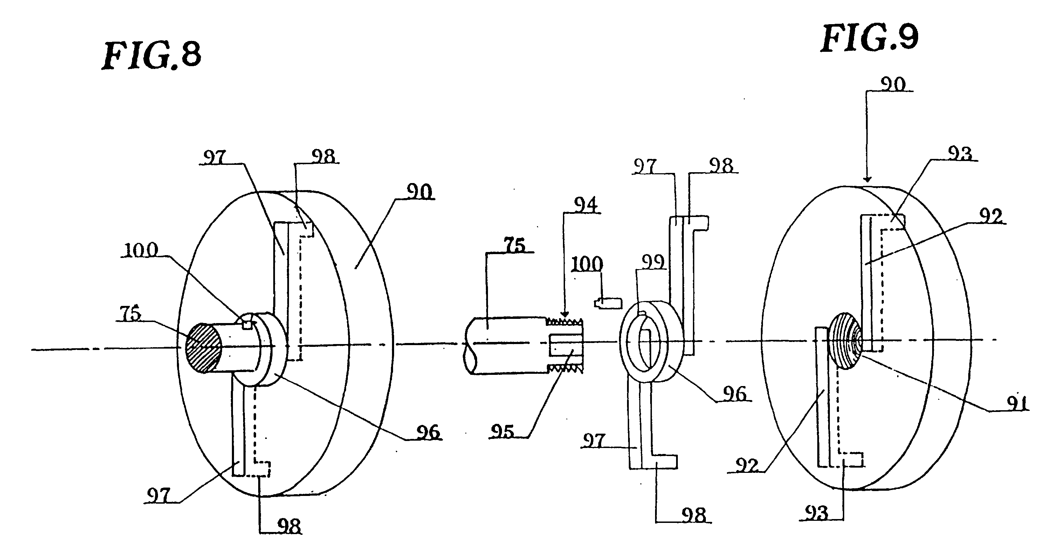

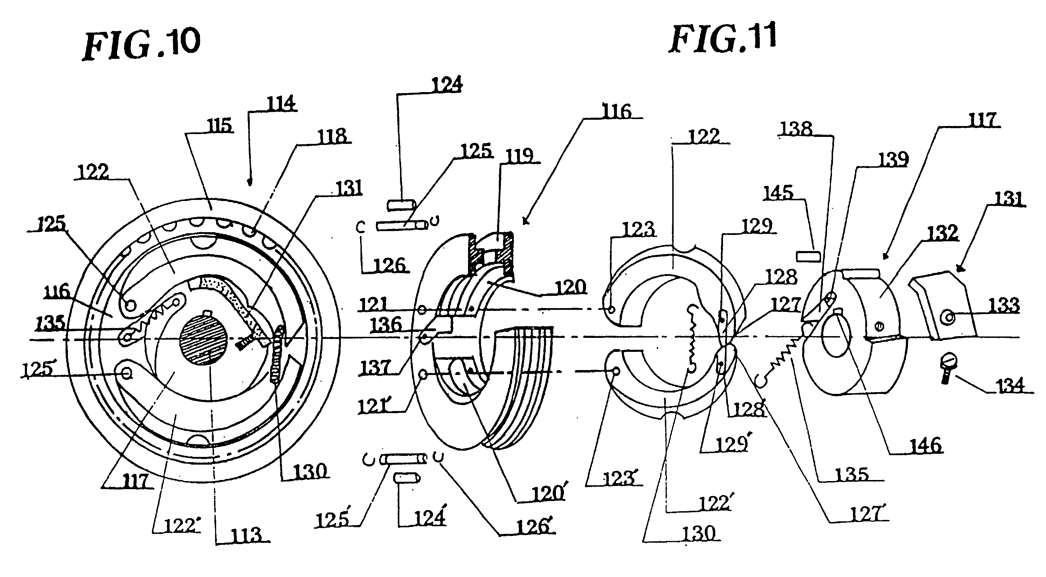

The crankjournal(75)/flywheel(90) comprises, as shown in Figs. 5, 8, and 9,a crankjournal(75), a journal flange(96), a flywheel (90), and traction rods(97). The crankjournal(75) has a male-threaded journal boss(94) at the end for supporting the flywheel (90) loosely and securely through threaded hub bore(91) and a pilot bearing housing(95) in the center of the journal boss(94) for supporting an existing clutchshaft (not shown). The journal flange(96) has two traction rods(97) projecting in opposite and inverse rotational directions toward spaced points of the rim of the flywheel(90), and traction pins(98) each extending at a right angle from the end thereof to hook in the rim of the flywheel(90). The flywheel(90) has the threaded hub bore(91) for mounting free on the journal boss(94), and two traction rod grooves(92) and traction pin bores(93) along the sides of the flywheel(90). The journal flange(96) will be mounted on the crankjournal(75) through the journal boss(94), a pilot bearing (not shown) be loaded in the pilot bearing housing(95), and the flywheel(90) mounted free on the journal boss(94) through the threaded hub bore(91) by screwing a little loosely, the clutchshaft (not shown) put into the pilot bearing, the traction pins (98) placed in the traction rod grooves(92) and traction pin bores(93) and finally the journal flange(96) keyed to the crank journal(75) via key(100) and keyhole(99), so as to cause the crankjournal(75) to facilitate the rotation of the flywheel(90) much more easily.

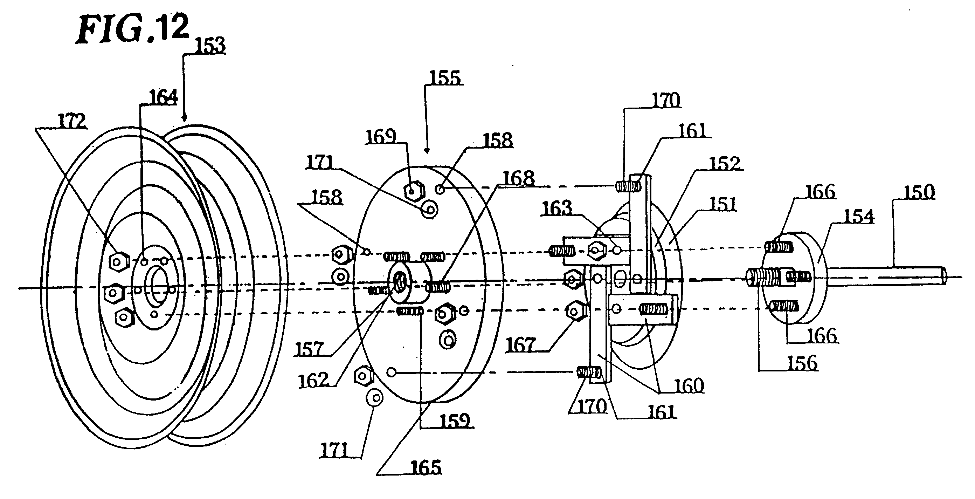

The automatic, constant-mesh, different size gear type transmission(101), as shown in Figs. 5, 10, and 11, comprises a set of mainshaft different size gears(102) mounted free on the mainshaft for free rotation, a driven clutch gear(107) at the mainshaft gear hub(103), a drive clutch gear(108) traveling by a shiftshaft(104) through splines(106) on the mainshaft to clutch at or to de-clutch from the driven clutch gear(107) and a countershaft reverse gear(111), and a mainshaft reverse gear(109), a mainshaft engine brake gear(105) and a countershaft engine brake gear(110) operated by another shiftshaft(104') for engine brake driving or heavy-duty driving, a countershaft, different size gears(112) with sprockets meshed with those of the mainshaft gears(102) individually mounted free on the countershaft(113), and automatic clutch sets(114) each counted between the countershaft(113) and the countershaft gears(112).

The automatic clutch sets(114) each have outer races(115), inner races(116), roller retainers(118), hubs(117), translation cams(122,122',131), and big tension springs(135) in uniform size for uniform operation. The outer races(115) have each lockpin bores(144) to fasten to the sides of the countershaft gears (112). The roller retainers(118) will be disposed between the inner races(116) and the outer races(115) to act as bearings or as sprags when pressed by a drive cam member(131). The inner races(116) are separated from the hubs(117) and have roller retainer housings(119) on the outer circumference and upper, lower driven cam member housings(120,120') in the inner circumference with hollow openings through the base of the roller retainer housings(119), pinboss bores(121,121') at one end and big tension spring grooves(136); and the inner races(116) loaded with the roller retainers(118) and the driven cam members(122,122') thereunder should be so heavy that the big tension spring(135) may extend when engine speeds are accelerated by an accelerator pedal to allow the drive cam members (131) to make access to and to press the driven cam members(122, 122'). The hubs(117) have drive member grooves(132) and big tension spring grooves(138) and spring pegs(139). The upper and lower driven cam members(122,122') have pin bores(123,123') at one end and the upper driven members(122) have such a curved surface and the drive members(131) have such a springy, curved surface that the drive members(131) will slide thereon back and forth frictionally to cause the driven members(122) to resist or yield to the pressure of the drive cam members(131), and the driven cam members(122,122') have sides so inclined at the other ends(127,127') that one other end(127) may ride on the other end (127') of the lower driven cam members(122') to exert the same pressure upon the outer races(115); the other ends(127,127') have small spring grooves(128,128') and small spring pegs(129, 129') for the small tension springs(130) to pull each other; the big tension springs(135) are so long and tensile that they may extend when the hubs rotate faster by the accelerator pedal pressed, thus causing the drive cam members(131) to make access to, touch, and to push the driven cam members(122,122') to press the rollers(118) against the outer races(115) all at the same time; at which time if the outer race(115) attached to the third speed gear should resist the pressure, the big tension spring (135) will extend, allowing the drive member(131) to slide frictionally on and pass the curved surface of the upper driven cam member(122) and to run ahead, drawing the inner race in a strained state; if the outer race(115) attached to the second gear would yield to the pressure, then the second speed gear will drive at this gear ratio and accelerate until when the outer race(115) of the third speed gear yield to the pressure and the third speed gear will take over; when the outer race of the second gear should run ahead of the inner race, the inner race will just follow, since the outer race rotates faster and the big tension spring returns to normal; when the accelerator pedal is released, all the big tension springs will return to normal, thus allowing the car to run by inertia; when the running car needs to be braked, only a brake pedal may be depressed without a clutch pedal being depressed, as the big tension springs will return to normal.

The clutch sets(114) will be assembled as follows: The upper and lower driven cam members(122,122') will be each loaded in the upper, lower driven member housings(120,120'), pins(125,125') and bushings(124,124') be inserted into the upper, lower pin boss bores(121,121') and pin bores(123,123') and fixed with snap rings(126,126'); while the small tension springs(130) be each strainedly hooked on the spring pegs(129,129') in the spring grooves(128,128') with one other end (127) riding on the other end(127'); the drive cam member(131) be disposed in the drive cam member groove(132) on the hub(117) and fixed thereto via screw(134) and screw bore(133); the hubs(117) be each placed in the center of the inner races(116); the big tension springs(135) be connected between the inner races(116) and the hubs(117) through the big spring grooves(136), spring pegs(137), hub spring grooves(138) and hub spring pegs(139). The clutch sets (114) will each be attached to the side of each countershaft gears(112) through the outer races(115) via lockpins(143) and lockpin bores(144) to be integral. Flanges(140) and the countershaft gears(112)/clutch sets(114) combined will be alternately inserted on the countershaft(113) and the flanges(140) be keyed to the countershaft(113) via keys(141) and keyholes(142) to prevent the gears from sliding axially or sidewise, and then the gears(112)/clutch sets(114) be put next to the flange(140) with its sprockets meshed with those of the mainshaft gears(102) and the hubs(117) be keyed to the countershaft(113) via countershaft keys(145) and keyholes(146) for completion.

This arrangement requires a conventional clutch pedal to be depressed before engaging a drive clutch gear(108) to a driven clutch gear(107) of the mainshaft gear hub(103) through a shiftshaft(104) for transmitting power to the mainshaft from the countershaft gears(112) for allowing the engine to run idle and for automatic trnamission in a 'D' drive position. The accelerator pedal will be simply depressed to start driving the car, and then the big tension springs(135) will extend, causing the drive translation cam members(131) to touch and push the driven cam members(122,122') and rollers(118) against the outer races (115) for clutching at the outer races(115) simultaneously;where by only one outer race(115) of the second speed gear or of the low gear will yield to the pressure according to the rotational speed and the gear ratio, and transmit the power; as the speed increases, the outer race of the third high speed gear will yield to the pressure and accelerate; at which time, if the accelerator pedal is released, the car will continue to run by inertia without the clutch pedal being depressed; the car may be stopped by depressing the brake pedal only, as the tension springs return to normal; when the accelerator pedal is depresed while running by inertia, the car will resume acceleration from the current speed, thus, the automatic gear type transmission will perform automatic transmissions by causing the respective outer race to clutch at or de-clutch from the inner races one after another by gear ratios and rotational speeds.

Meanwhile, the mainshaft engine brake gear(105) and the count-shaft engine brake gear(110) will be separately mounted on the mainshaft and the countershaft to drive the car with a greater torque or to use as a strong brake gear. This system can be used when strong brake operation is required, since this is mounted ahead of and to act on the drive propellershaft/traction pulleys/driven propellershaft with the minimum efforts.

The range pattern of the shift lever of this automatic transmission may have four selector-lever positions: reverse (R), neutral (N), drive(D), low engine brake drive (L) ( not shown).

The semi-floating rearaxle(150)/traction brake-drum(151)/drive wheel(153) comprises, as shown in Figs. 5 and 12, a semi-floating rearaxle(150), a rearaxle flange(154), a brakeshoe(152), a traction brake-drum(151), a free joint flange(155), and a drive wheel(153). A conventional rearaxle(150) is cut short at the end connected to the differential gear by the width of the free joint flange(155) in front of the rearaxle flange(154), and a rearaxle boss(156) is extended by that much from the rearaxle flange(154) and male-threaded for supporting the free joint flange(155) free and secure; the free joint flange(155) has wide hub boss(157) with a threaded bore(162) thereunder for mounting free on the male-threaded rearaxle boss(156), four hub boltbores (159) around the hubboss(157) for holding the drivewheel(153), and a force-point rim(165) as a radially long as to a drive wheel base with four spaced rim bolt bores(158); the traction brake-drum(151) has four traction rods(160) projecting tangentially from the hub of brake-drum(151), partitioned by slit, in a less radial width of the rearaxle flange(154) to the spaced rim bolt bores(158) of the free joint flange(155), and has thick traction rod bolt bores(161) at the open ends. The traction brake-drum(151) will be mounted on the rearaxle flange(154) and fixed thereto via short hub bolts(166), drum hub bolt bores (163) and nuts(167). The free joint flange(155) will be threadedly mounted on the male-threaded rearaxle boss(156) but a little loosely; in this state the traction rod bolts(170) be put into the four bolt bores(161) of traction rods(160) and the rim bolt bores(158) of the free joint flange(155) and fixed via washers (171) and nuts(169); hub bolts(168) be joined firmly to the hub bolt bores(159) of the free joint flange(155); the drivewheels (153) will be fixed to the hub bolts(168) through hub bolt bores (164) of the drivewheels(153) for completion of the assembly. With this arrangement the rearaxle(150) will rotate easily the free joint flange(155) or the drivewheel(153) by drawing by rim through the traction rods(160), and the drivewheels(153) will be easily braked by the brake-drum checking the rotation of the drivewheels by rim through the traction rods(160).

### Embodiment 3, Bicycle

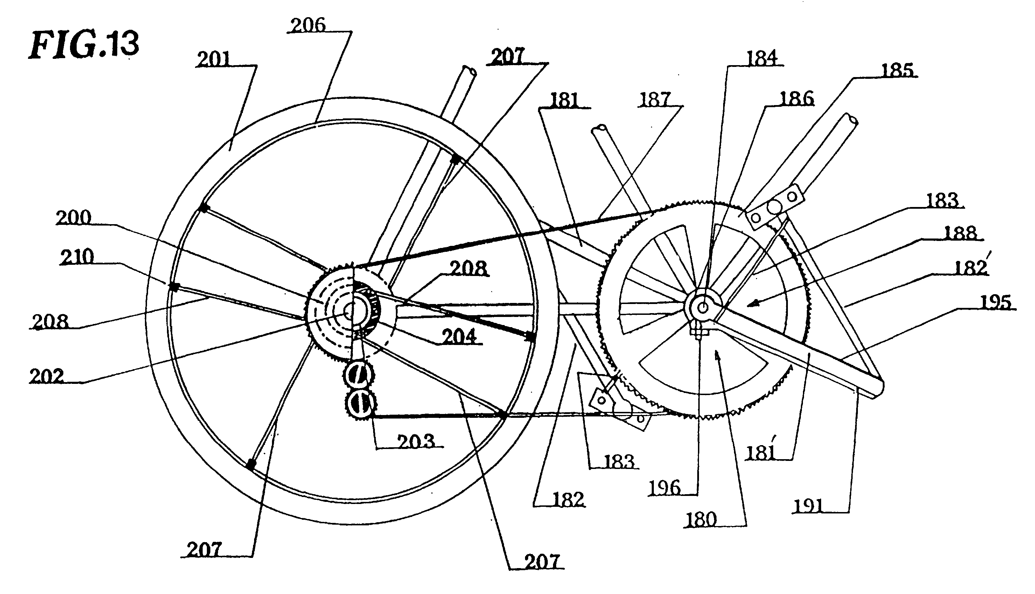

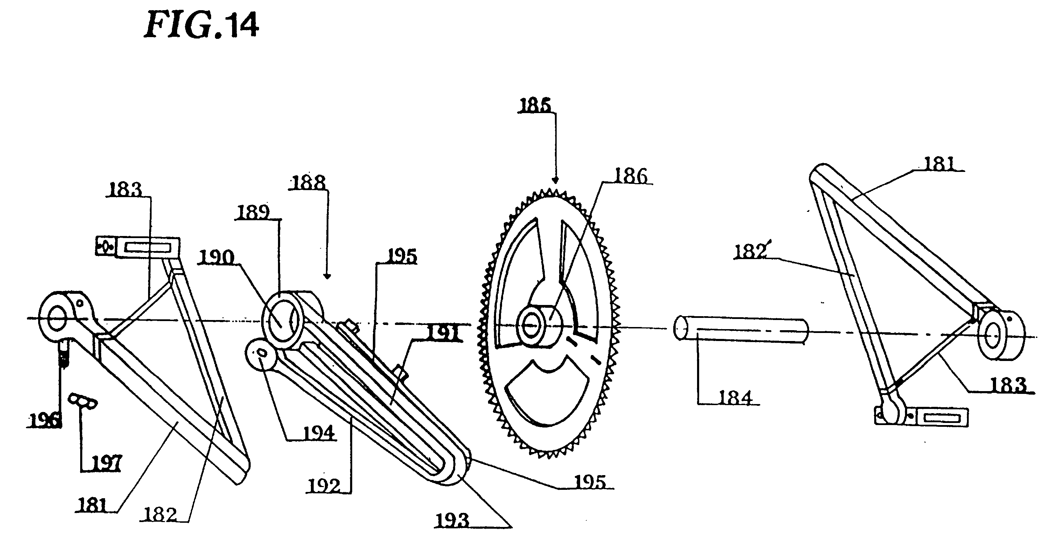

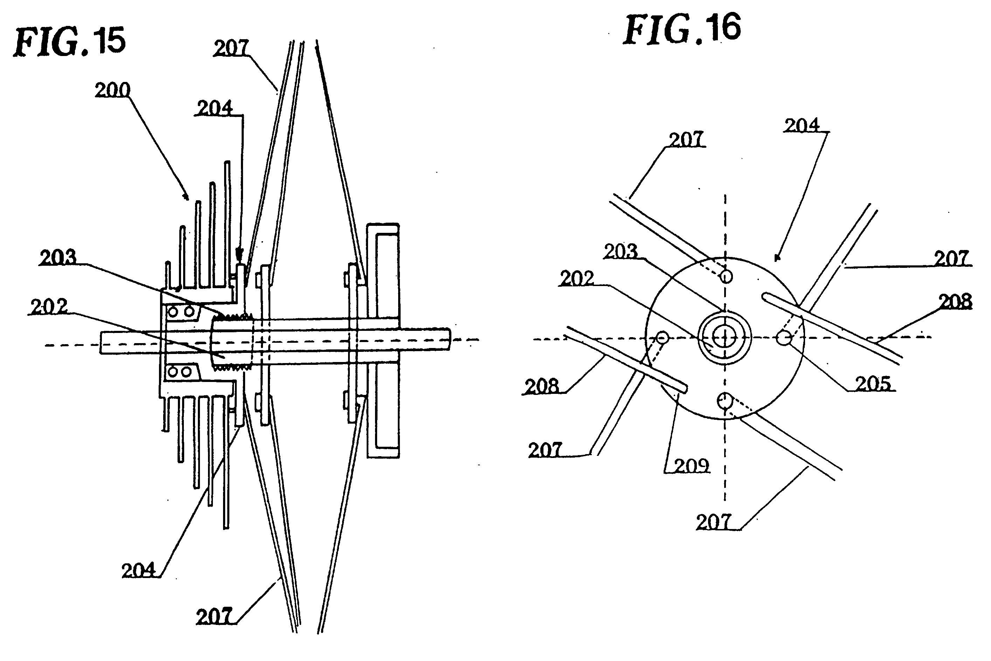

Pedal crankshaft(180)/chaingear(185), and free gears(200)/rear wheel(201) are shown in Figs. 13, 14, 15, and 16. The pedal crankshaft(180)/chaingear(185) comprises left, right pedal crank arms(181,181'), tangent pushrods(182,182'), left, right holders (183,183'), a leverset(188), a chaingear(185), and chain(187). The left, right crankarms(181,181') are each extended from 17 centimeters to twenty one centimeters in radius for easy rotation by end pushing. The left, right tangent pushrods(182,182') each bend from the open end of the crankarms backward from the rotational direction and project about 30 centimeters up to where conventional pedal craukarms ended, and pedals be mounted on the end, so that bicyclist's pedaling at the top-dead-center may push the end of the elongated crankarms toward a full rotational direction through the tangent pushrods(182,182') for most efficient rotation. The left, right holders(183,183') are of wire and coupled between the hub end of the crankarms (181, 181') and the pedal end of the tangent pushrods(182,182') to prevent the tangent pushrods from being impaired when a bicyclist stands on the pedals. The chaingear(185) has a wide chaingear hub boss(186) for supporting a lever hub boss(189) and mounting free on the crankjournal(184). The leverset(188) has a lever hubboss (189) with a leverhub bore(190) for mounting free on the chain gear hubboss(186) and 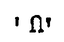 shaped, rigid force-point rod/elastic traction rod(193) with the force-point rod(191) projecting in a left, radial width from the lever hubboss(189) about 21 centimeters as long as the crankarm(181') and the traction rod(192) curving at the end of the force-point rod(191) and extending to the hub bolt(196) of the right crankarm(181') for coupling there to so as to allow the hub bolt(196) (a weight point) to draw a force-point through the traction rod, and a 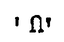 shaped separate elastic traction rod/rigid force-point rod(195) projecting tangentially in a right radial width from the lever hubboss(189) to as far as the force-point rod/traction rod(193) and curving back long enough to be coupled to two spots of the radial surface of the chaingear(185) so as to allow the weight point of the lever to draw the elongated force-point of the chaingear through the traction rod(195). The lever set(188) will be mounted on the chaingear hubboss(186) free through the lever hubboss(189), and the force-point rod of the separate traction rod/force-point rod (195) be welded at the two spots to the surface of the chaingear (185) to be integral. The chaingear hubboss(186) will be mounted free on the crankjournal(184) on the right side, the left and right pedal crankarms(181,181') will be fixed to either end of the crankjournal(184), and the open end of the force-point/traction rod(193) will be fixed to the hub bolt(196) through bolt bore(194) with nut(197) for complete assembly, so as to provide lever means in series combined with the curved, elongated crank arms(181,181'), leverset(188) and chaingear(185) for facilitating the rotation of the chaingear much more easily.

The free gears(200)/rearwheel(201), as shown in Figs. 13, 15, and 16, comprises free gears(200), a ratchetwheel inner race (203), flange(204) attached to the inner race(203), four traction spokes(207), balance spokes(208), and rearwheel(201). The ratchetwheel inner race(203) has the flange(204) attached around the rim thereof with four spaced traction spoke bores(205) and two balance spoke bores(209) formed around its rim for hooking the ends of traction and balance spokes(207,208). Four traction spokes(207) and two balance spokes(208) will be selected among conventional spokes which were coupled before and hooked in the spaced traction spoke bores(205) and the balance spoke bores( 209) of the flange(204) at one ends, before the inner race(203) be screwed a little loosely on the rearwheel spindle(202), and the other ends(male-threaded) of the traction spokes(207) be screwed into wheelrim spoke bores(210) inverse tangent to the flange(204) for serving as tangent traction rod, and the other ends of two balance spokes(208) be screwed into the two wheel-rim spoke bores(210) forward tangent to the flange(204) for balancing and co-rotating with the inner race(203), so as to provide lever means combined with the inner race(203), traction spokes(207), balance spokes(208), and the rearwheel(201) for facilitating the rotation of the rearwheel(201) more easily.

### Industrial Applicability

The invention of the wheel and axle potential energy will bring about an industrial revolution to the entire industrial world. It is because powertrains of machinery comprising traction pulley means connected in series enable it to start running with the least input and to keep running with an electric energy that it produces while running, as illustraded above. Motor-driven generator electric plants can be established at any places for local needs of electric energy. This fact may resolve not only the problems of the depletion of fossil energy and of the polluted gas emission but also enormous operational costs of atomic power plants and nuclear waste. As a result this invention truly enables all mankind as a whole to make an easy, economic use of modern conveniences under the pure, green environment of the Mother Nature as it is, thus contributing greatly to the human enjoyments of plentiful, prosperious, cultural lives.

### Conclusion and Scope of Invention

Thus the reader will see that the high-powered powertrain of this invention provides a highly reliable, simple, efficient, economic transmission means, which can be applied to all kinds of machinery.

While my above description contains many specificities, these should not be construed as limitations on the scope of the invention but rather as some exemplifications of the preferred embodiments thereof. Many other variations are possible. For examples, in a conventional automative transmission comprising a big gear fixed to a driveshaft and a small gear fixed to a driven shaft with either sprockets meshed constantly for higher speeds, a flange with a short radius should rather be fixed to the drive shaft, the big gear just mounted free on the drive shaft, and a traction rod be coupled tangentially from the flange rim to the rim of the big gear so as to cause the drive shaft to rotate the big gear by drawing by rim through the traction rod for easy rotation, and the small gear should be mounted free on the driven shaft and a flange (pulley) with a long radius should be mounted on and fixed to the driven shaft next to the small gear and a traction rod should be coupled tangentially from the small gear hubboss to the rim of the big flange so as to cause the small gear to rotate the big flange by drawing by rim for much easier transmission. Another example is that a handbrake system of brake-drum, band, and lining should be mounted on the mainshaft before the drive propeller-shaft/traction pulleys/driven propellershaft, so that the handbrake may work with the least effort.

Accordingly the reader is requested to determine the scope of the invention by the appended claims, not by the examples which have been given.

## Claims

1. High-powered powertrain of an electric car by a wheel and axle potential energy for boosting a motor output so as not only to operate a large-capacity generator for generating a self-supporting electric energy but also to drive carwheels comprising: a left motoraxle(10)/left traction pulleys(11)/left variable resistance electro-magnetic (VREM) clutch(27)/left traction pulleys(11)/force-point pulley(19)/right generatoraxle(43'); right motoraxle(10')/right traction pulleys(11')/right VREM clutch(27')/drive propellershaft(48) assembly drive propellershaft(48)/ right traction pulley(56)/free joint pulley(51)/driven propeller shaft(50); cooling fan(22)/left motoraxle(10) assembly and a cooling fan (22)/left generatoraxle(43) assembly, **characterized in that** it comprises
a plurality of said left, right traction pulleys(11,11') each having hub bosses(12,12') for serving as a weight point of a lever, and a radially long, circular rim for serving as a force-point and reducing air resistance and noises in speedy rotation; a plurality of elastic traction rods(13,13') projecting tangentially from said hub bosses(12,12') leftward or rightward to other traction pulley rims for. drawing the rims of next said traction pulleys(11,11') with the effort exerted at the weight point; said force-point pulley(19) having the same long and circular pulley as said traction pulleys(11,11'); said left, right VREM clutches(27,27') comprising drive members(28,28') having each. left, right excited coil cores(29,29') projecting tangentially from the hub bosses, and force-point pulleys(30,30') being integral with the hub bosses of said drive members(28,28') for being drawn easily by rim; and left, right driven members (34,34') having each left, right shorting coil poles(44,44') facing straight to said excited coil cores(29,29') for easy atrraction, and said left driven member(34) having an: elastic traction rod/pin(35) assembly projecting tangentially from the hubboss of said driven member(34) for coupling to the rim of next said traction pulley(11); said left, right traction pulleys(11,11') and said drive members(28,28') mounted free on said left and right motoraxles(10,10'), said first-inserted traction pulleys (11,11') keyed to said motoraxles(10,10'), the open ends of said traction rods(13,,13') coupled firmly to said pulley rims(15,15') of next said traction pulleys(11,11') for boosting a motor output; said force-point pulley(19), said left traction pulleys(11), and said shorting coil driven member(34) mounted free on said right generatoraxle(43') in line with said excited coil core(29), said traction rods(13) connected to the rims of next said traction pulleys(11) and said force-point pulley(19), and said force-point pulley(19) keyed to said right generatoraxle(43) for clutching or further increasing the boosted output to operate said generatoraxle(43); and said right driven member(34') mounted on and keyed to said drive propellershaft(48) for clutching and facilitating said propellershaft(48) to rotate more easily;
said cooling fan(22) having a hubboss(23) for fixing to said axles(10,43) and blades(24) projecting at some forty degrees forward direction from the inverse tangent of said hubboss(23) in a less than the radial width of said hubboss(23) in opposite direction, so that the axles may rotate, drawing said blades(24) slantly; said cooling fan(22) mounted on and keyed to said axles (10,43) for easy rotation;
said drive propellershaft(48) and said driven propellershaft (50) being divided in from a conventional propellershaft not to transmit power directly, said drive propellersnaft(48) having male-threaded end(49), and said free joint pulley(51) having a a wide hubboss(52) with an unthreaded bore(53) at one side for joining rigidly to said driven propellershaft(50) and a female-threaded bore(54) on the other side for joining a little loosely to said male-threaded end(49) and having a traction rod bore(55) on rim; said free joint pulley(51) half mounted on the end of said driven propellershaft(50) through said unthreaded bore(53) and keyed thereto via keyhole(61) and key(60), a plurality of said right traction pulleys(56) mounted free on said drive propellershaft(48), said male-threaded end(49) of said drive propellershaft(48) screwed a little loosely into said female-threaded bore(54) of said free joint pulley(51), traction pins (57) coupled to the rims of next said traction pulleys(56), and
said first-inserted pulley(56) keyed to said drive propellershaft(48) via key(60) and keyhole(61).

2. The high-powered powertrain according to claim 1 wherein said left, right traction pulleys(11,11'), said force-point pulley(19), and said force-point pulleys(30,30') each have left, right traction pin bores (15,15',36,31,31') on rims in an opposite direction to said traction rods(13,13'); said traction rods(13,13') each have pins (14,14') extending at a right angle toward said traction pin bores(15,15',36,31,31') for hooking in; and said left shorting coil driven member(34) has a traction rod/pin assembly (35) extending at the same right angle as above; said traction pins(14,14,35) inserted into said traction pin bores(15,15',31,31') and fastened via screw bores(37,16) and screws(58,17) for causing said traction rods(13,13',35) to draw the rims of said traction pulleys(11,30,30') properly and securely.

3. High-powered powertrain of an internal combustion engine car by a wheel and axle potential energy for boosting an engine output produced by the perfect combustion of a thinner mixture of gasoline and air and by the emission of little polluted gas so as to operate the carwheels fully and smoothly, and for enabling a constant-mesh gear type transmission to operate automatically and to freewheel by inertia comprising: a connecting rods (70)/crankshaft(71) assembly, a crankjournal/(75) flywheel(90) assembly, a constant mesh gear type transmission(101), and semi-floating rearaxle(150) /traction brake-drum(151)/drivewheels (153) assembly, whereof:
said connecting rods(70)/crankshaft(71) assembly comprising a plurality of connecting rods(70) and said crankshaft(71) having crankjournal(75), crankarms(76), tangent pushrods(77), crankpins(78) loading each contract spring sets(74), and balance weights(79), **characterized in that**
said crankarms(76), said tangent pushrods(77), and said balance weights (79) each being formed in a disc, partitioned by slit, so as to rotate without vibrations and noises in the airspace and to secure flywheel effects; said crankarms(76) projecting laterally and tangentially from said crankjournal(75) by slit in a width less than the radius of said crankjournal(75) toward a point of the disc rim at an abtuse angle forward from said crank pin(78), so as to cause said big end(72) to push in expansion strokes the open end of said crankarms(76) toward a rotational direction, and to cause said crankjournal(75), in suction, compression, and exhaust strokes to rotate easily, drawing down and up said big end(72) through said crankarm(76); said tangent pushrod(77) extending inversely from the open end of said crank arm(76), in a half-moon shape, by slit on one side, in a narrow width at the end toward said crankpin(78) and connecting integrally to said crankpin(78), so as to cause said big end to push said crankpin and said tangent pushrod toward a rotational direction; said crankpins(78) of said crankshaft(71) rotatably mounted on by said big end as before and joined by tap bolts(80) and nuts(81), so as to cause said crankshaft(71) to perform easy smooth rotation with a little input but exerting an output greater than the input:
said crankjournal(75)/flywheel(90) assembly comprising said crankjournal(75), journal flange(96), flywheel(90), and traction rods(97) with said
crankjournal(75) having a male-threaded boss(94) at the end for holding said flywheel loosely, and a pilot bearing housing(95) in the center of said boss(94); said journal flange(96) having a plurality of traction rods(97) projecting tangentially from said flange(96) in opposite and inverse rotational directions toward points of the rim of said flywheel(90), and traction pins(98) each extending at a right angle from the open end of said traction rods(97) so as to hook in the rim of said flywheel(90); said flywheel(90) having a female-threaded hubbore (91) for mounting on said journal boss(94) free and secure, and traction rod grooves(92) and traction pin bores(93) along the opposite sides of said flywheel(90); said journal flange(96) being mounted and keyed to the end of said crankjournal(75), a pilot bearing (not shown) loaded in said pilot bearing housing (95), said flywheel(90) mounted free on said male-threaded boss (94) through said threaded hubbore(91), said traction rod(97) and pins(98) placed in said grooves(92) and said traction pin bores(93), and said journal flange(96) keyed to said crankjournal so as to cause said crankjournal to facilitate the rotation of said flywheel(90) easily;
said automatic constant-mesh, different size gear type transmission(101) comprising a set of mainshaft different size gears (102) mounted free on a mainshaft, shiftshaft(104), splines(106) drive clutch gear(108), driven clutch gear(107), mainshaft engine brake-gear(105), mainshaft reverse gear(109), countershaft, different size gears(112) individually mounted free with sprockets meshed with those of said mainshaft gears(102), automatic clutch sets(114), countershaft engine brake-gear(110), countershaft reverse gear(111),
with said automatic clutch sets(114) being coupled between said countershaft(113) and said countershaft gears(112), said automatic clutch sets(114) containing clutch means in uniform sizes for causing them not to clutch at or to de-clutch from said countershaft gears(112) at idle engine speeds when an accelerator pedal is unpressed or released, so as to allow the engine to run idle without a clutch pedal being depressed, to allow drivewheels to freewheel by inertia, or to allow the drivewheels to be braked without the clutch pedal being depressed, but causing them to clutch at said countershaft gears(112) at accelerating speeds for automatic transmission when the accelerator pedal is being pressed, so as to allow only one clutch set(114) to drive alternately one of said countershaft gears(112) while other sets (114) not to clutch at or de-clutch from said countershaft gears according to engine speeds and gear ratios, or to clutch at the running countershaft gear(112) to resume speeds after freewheeling, when the accelerator pedal is re-pressed;
said semi-floating rearaxle(150)/traction brake-drum(151), drivewheel(153) assembly comprising a semi-floating rearaxle(150), a rearaxle flange(154), brakeshoe(152), traction brake-drum(151), free joint flange(155), and drivewheel(153),
with said rearaxle(150) being cut short at one end connected to a differential gear by the width of said free joint flange(155) in front of said rearaxle flange(154) and extended by that much from said rearaxle flange(154) to form a rearaxle boss(156) being male-threaded for supporting said free joint flange(155) free and secure; said free joint flange(155) having a wide hubboss(157) with a threaded bore(162) therein and a plurality of spaced hub boltbores(159) around said hubboss(157) for holding said drivewheel(153) and a force-point rim(165) as radially long as to a drivewheel base with a plurality of spaced rim bolt bore (158); said traction brake-drum(151) having a plurality of traction rods(160) projecting tangentially from the hub of said brake-drum(151), partitioned by slit, in a less radial width of said rearaxle flange(154) to said spaced rim bolt bores(158) of said free joint flange(155) and having thick traction rod bolt bores(161) at the open ends; said traction brake-drum(151) being mounted on said rearaxle flange(154) and fixed thereto via short hub bolts(166), drum hub bolt bores(163) and nuts(167); said free joint flange(155) threadedly mounted on said threaded rearaxle boss(156) only a little loosely; in this state said traction rod baits(170) put into said bolt bores(161) of said traction rods(160) and said rim bolt bores(158) of said free joint flange (155) and fixed via washers(171) and nuts(169); hub bolts(168) joined firmly to said hub bolt bores(159) of said free joint flange(155); said drivewheels(153) fixed to said hub bolts(168) through hub bolt bores(164) of said drivewheels(153).

4. The high powered powertrain according to claim 3 wherein said automatic clutch sets (114) comprising outer races(115), inner races(116), roller retainers(118) hubs(117), translation cams(122,122';131), and big tension springs(135) in uniform sizes for uniform operation; said outer races(115) having each lockpin bores(144) to fasten to the sides of said countershaft gears(112) for co-rotation; said roller retainers(118) being disposed between said inner races(116) and said outer races(115) for acting as bearings or as sprags when pressed by said drive cam members(131); said inner races(116) being separated from said hubs(117) for idle rotation with said roller retainers(118) and said driven cam members(122,122') but connected elastically to said hubs(117) for being drawn elastically by said hubs(117), said inner races (116) having roller retainer housings(119) on the outer circumference and upper, lower driven cam member housings(120,120') in the inner circumference with hollow openings through the base of said roller retainer housings(119), pin boss bores(121, 121') at one end and big tension spring grooves(136) below therefrom, said inner races(116) loaded with said roller retainers(118) and said driven cam members(122,122') thereunder should be so heavy that said big tension spring(135) may extend when the engine speeds are accelerated by an accelerator pedal to allow said drive cam members(131) to make access to and to press said driven cam member(122,122') hard; said hubs(117) fixed to said countershaft(113) and connected to said inner races(116) for drawing elastically, said hubs(117) having drive cam member grooves(132) on the outer surface and big tension spring grooves(138) and spring pegs(139) on one side; said upper and lower driven cam members(122,122') having each pin bores(123,123') at one end, and said upper driven members(122) having such a curved surface and said drive cam member(131) having such a springy, curved surface that said drive cam members(131) will slide thereon back and forth frictionally to cause said driven cam members(122,122') to properly resist or yield to the pressure of said drive cam members(131) according 0 to engine speeds and gear ratios; said driven cam members(122, 122') each having sides so inclined at said other ends(127,127') that one other end(127) may ride on said other end(127') of said lower driven cam member(122') to exert the same pressure upon said outer races(115); said other ends(127,127') having small spring grooves(128,128') and small spring pegs(129,129') for said small tension spring(130) to pull each other; said big tension springs(135) being connected between said hubs(117) and said inner races(116), said big tension spring(135) being so long and tensile that they may not extend when said hubs(117) rotate at engine idling speeds, but that they may extend, when said hubs rotate faster, drawing said inner races, by the accelerator pedal being pressed, so as to cause said drive cam members(131) to make access to, touch, and to push hard said driven cam members(122,122') to press said rollers(118) against said outer races(114) all at the same time; at which time if said outer race(115) attached to the third speed gear should resist the pressure, said big tension spring(135) will further extend to allow said drive cam member(131) to slide frictionally on and pass the curved surface of said upper driven cam member(122) and to run ahead, drawing only said inner race(116) in a strained state; if said outer race(115) to the second speed gear would yield to the pressure, it remain there extended to allow the second speed gear to drive at this gear ratio and to accelerate until when said outer race(115) of the third speed gear would yield to the pressure, and to allow the third speed gear to take over; when said outer race of the second gear should run ahead of said inner race, it will return normal, allowing said hub to draw said inner race only; when the accelerator pedal is released, all said big tension springs(135) will return normal, allowing the car to run by inertia; when the running car needs to be braked, only the brake pedal should be depressed without the clutch pedal being depressed, as the big tension springs will return to normal;
said upper and lower driven cam members(122,122') being each loaded in said upper, lower driven member housings(120,120'), pins(125,125') and bushings(124,124') inserted into said upper, lower pin boss bores(121,121') and pin bores(123,123') and fixed with snaprings(126,126'); while said small tension springs(150) each strainedly hooked on said spring pegs(129,129') in said said spring grooves(128,128') with said other end(127) riding on said other end(127'); said drive cam members(131) each disposed in said drive cam member grooves(132) on said hubs(117) and fixed thereto via screw(134) and screw bore(133); said hub(117) each placed in the center of said inner races(116); said big tension springs(135) connected between said inner races(116) and said hubs(117) through said big spring grooves(136), spring pegs (137), said hub spring grooves(138) and hub spring pegs(139); said clutch sets(114) each attached to the sides of said counter shaft gears(112) through said outer races(115) via lockpins(143) and lockpin bores(144); flanges(140) and said countergears(112)/clutch sets(114) combined being alternately inserted on said countershaft(113) and said flanges(140) keyed to said countershaft(113) via keys(141) and keyholes(142) to prevent said countergears(112) from sliding axially, and then said counter-gears(112)/clutch sets(114) assembly put next to said flanges(140) with their sprockets meshed with those of said mainshaft gears(102), and said hubs(117) keyed to said countershaft(113) via keys(145) and keyholes(146) for proper automatic clutch operations.

5. High-powered powertrain of bicycle by a wheel and axle potential energy for facilitating the pedaling of a bicycle comprising a pedal crankshaft (180) chaingear(185) assembly, and free gears (200), on a rearwheel(201), whereof said pedal crankshaft(180)/chain gear(185) assembly comprises left, right pedal crankarms(181,181'), tangent pushrods(182,182'), left, right holders(183,183'), crankjournal(184), leverset(188), and chaingear(185),
**characterized in that**
said left, right crankarms(181,181') being each extended long enough not to touch the ground and a frontwheel mudguard for easy rotation; said left, right tangent pushrods(182,182') bending from the open end of said crankarms(181,181') backward from the rotational direction and projecting at an acute angle up to where conventional pedal crankarms ended, and pedals mounted on the end, so that bicyclist's pedaling may push it to a rotational direction; said left, right holders(183,183') being of wire and coupled between the hub end of said crankarms(181,181') and the pedal end of said tangent pushrods(182,182') to prevent said tangent pushrods(182,182') from breakage; said chaingear(185) having a wide chaingear hub boss(186); said leverset(188) having a lever hub boss(189) with lever hubbore(190) for mounting free on said chaingear hubboss(186) and 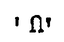 shaped, rigid force-point rod/elastic traction rod(193) assembly with a force-point rod(191) projecting in a left, radial width from said lever hubboss(189) as long as said elongated crankarm(181') and said traction rod (192) curving at the end of said force-point rod(191) and extending up to said hub bolt(196) of said right crankarm(181') for coupling thereto so as to allow said hub bolt(196) to draw a force-point through said traction rod(192), and a 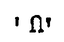 shaped separate traction rod/force-point rod(195) assembly projecting tangentially in a right radial width from said lever hubboss(189) to as far as said force-point rod/traction rod(193) and curving back long enough to be coupled to two spots of the radial surface of said chaingear(185); said leverset(188) mounted on said chaingear hubboss(186) free through said lever hubboss(189), and the force-point rod of said separate traction rod/force-point rod(195) assembly welded at the two spots to the surface of said chain gear(185); said chaingear hubboss(186) mounted free on said crank journal(184) on the right side, said left and right pedal crank arms(181,181') fixed to either end of said crankjournal(184), and the open end of said force-point/traction rod(193) assembly fixed to said hubbolt(196) through bolt bore(194) with nut(197);
said free gears(200)/rearwheel(201) assembly comprises free gears(200) ratchetwheel inner race(203), flange(204), four traction spokes (207), balance spokes(208), and rearwheel(201), with said ratchetwheel inner race(203) having said flange(204) attached to the rim with a plurality of spaced traction spoke bores(205) and a plurality of balance spoke bores (209) formed around its rim for hooking the ends of said traction spokes(207) and of said balance spokes(208); a plurality of said traction spokes(207) and said balance spokes(208) selected among conventional spokes which were coupled before and hooked in said flange(204) at one ends, before said inner race(203) being screwed a little loosely on a rearwheel spindle(202), and the other ends (male-threaded) of said traction spokes(207) being screwed into wheelrim spoke bores(210) inverse tangent to said flange(204) for serving as tangent traction rod, and the other ends of said balance spokes(208) screwed into said wheel rim spoke bores(210) forward tangent to said flange(204) for balancing and co-rotating with said rearwheel(201).

## Patentansprüche

1. Hochleistungsgetriebe eines elektrischen Autos, das ein Rad und Achse (axiale) potentielle Energie zur Steigerung einer Motorleistung benutzt, um nicht nur einen Großraumgenerator zur Erzeugung einer selbsttragenden elektrischen Energie zu bedienen, sondern auch zum Antrieb von Autorädern bestehend aus: eine linke Motorachse (10) / linke Zugrolle (11) /linker elektro-magnetischer Regelwiderstand (VREM) Kupplung (27) / linke Zugrolle (11) /Kraft-Punkt Rolle (19)/ rechte Generatorachse (43'); rechte Motorachse (10) / rechte Zugrolle (11') / rechte VREM Kupplung (27') / Gelenkwellenmontage (48); Antriebsgelenkwelle (48) /rechte Zugrolle (56)/ freie Verbindungsrolle (51) / angetriebene Gelenkwelle (50); Ventilator (22)/ linke Motorachsenmontage (10), und ein Ventilator (22)/ linke Generatorachsenmontage (43), charakterisiert dadurch, dass es besteht aus: eine Vielzahl der genannten linken, rechten Zugrollen (11, 11'), die je eine Nabenbosse (12, 12') besitzen, welche als Gewichtspunkt eines Hebels dient, und eine radiale lange, kreisförmige Felge, die als Kraft-Punkt und zur Verminderung des Luftwiderstandes und des Lärms bei schneller Drehung dient; eine Vielzahl von elastischen Zugstangen (13, 13'), die tangential aus gesagten Nabenbossen links oder rechts zu anderen Zugrollenfelgen zum Ziehen der Felgen von den nächsten genannten Zugrollen (11, 11') mit der Leistung, die am Gewichtspunkt aufgebracht wird, projiziert werden; genannter Kraftpunkt, der die gleiche lange und kreisförmige Rolle wie die genannten Zugrollen besitzt (11, 11'); genannte linke, rechte VREM Kupplungen (27, 27'), bestehend aus Antriebgliedern (28, 28'), die je links, rechts angeregte Spulenkerne besitzen, die tangential von den Radnabe Bossen projiziert werden; und Kraft-Punkt Rollen (30, 30'), die mit den Nabenbossen der genannten Antriebsglieder (28, 28') integriert sind, um leicht von der Felge gezogen zu werden; und linke, rechte angetriebenen Glieder (34, 34'), die je linke, rechte kürzenden Spulenpole (44, 44') besitzen, die gegenüber zu den genannten angeregten Spulenkernen (29, 29') zur leichten Anziehung aufgestellt sind, und die genannten linken angetriebenen Glieder (34) haben eine Montage von elastische Zugstange/ Stift (35), die tangential von den Nabenbosse von den genannten angetriebenen Gliedern (34) hinausragen, um an die Felge von der nächsten genannten Zugrolle (11) zu koppeln; die genannten linken, rechten Zugrollen (11, 11') und die genannten Antriebsglieder (28, 28'), die frei an die genannten linken und rechten Motorachsen (10,10') angebracht sind, die genannten ersteingesetzten Zugrollen (11, 11') verkeilt mit den genannten Motorachsen (10, 10'), die offenen Enden der genannten Zugstangen (13, 13'), die fest verkuppelt mit den genannten Zugfelgen (15, 15') der nächsten genannten Zugrollen (11, 11') sind, um die Motorleistung zu steigern; die genannten Kraftpunktrollen (19), die genannten Zugrollen (11), und die genannten Kurzschlussspulen angetriebenen Glieder (34), die frei an den genannten rechten Generatorachse (43') auf einer Linie mit den genannten angeregten Spulenkern (29) montiert sind, die genannten Zugstangen (13), die verbunden sind mit den Felgen der nächsten genannten Zugrollen (11) und den genannten Kraftpunktrollen (19), und die genannte Kraftpunktrolle (19), die mit den genannten rechten Generatorachse verkeilt ist, um die erhöhte Leistung zu erfassen oder sie weiter zu steigern, um die genannte Generatorachse (43) zu bedienen; und das genannte rechte angetriebene Glied (34'), das montiert und verkeilt ist mit der genannten Antriebsgelenkwelle (48), um die genannte Gelenkwelle (48) einzukuppeln und zu erleichtern für die leichtere Rotation; der genannte Ventilator (22), welches eine Radnabe (23) hat, um die genannten Achsen (10, 43) und Blätter (24) anzubringen, die um 40° in Vorwärtsrichtung von der entgegengesetzten Tangente von der genannten Radbosse (23) in weniger als der radialen Weite der genannten Radbosse (23) in entgegengesetzter Richtung zu verlängern, so dass die Achsen rotieren dürfen, und die Blätter (24) schräg zu ziehen; der genannte Ventilator (22), der montiert und verkeilt mit den genannten Achsen (10, 43) sind wegen der leichten Rotation; die genannte Gelenkwelle (48) und die genannte angetriebene Gelenkwelle (50), die geteilt sind von einer konventionellen Gelenkwelle, um nicht die Kraft direkt zu übermitteln, die genannte Gelenkwelle (48), die ein mit einem Außengewinde versehenes Ende (49) haben, und die genannte freie Verbindungsscheibe (51), die eine breite Nabenbosse (52) mit einer Bohrung ohne einem Außengewinde (53) auf einer Seite, um starr mit der genannten angetriebenen Gelenkwelle (50) zu verbinden und eine Bohrung mit einem Innengewinde (54) auf der anderen Seite hat, um ein wenig lose mit dem genannten mit einem Außengewinde versehenen Ende (49) zu verbinden und eine Zugstangenbohrung (55) auf der Felge besitzt; die genannte freie Verbindungsrolle (51), die durch die genannte Bohrung ohne Außengewinde (53) halb am Ende der genannten angetriebenen Gelenkwelle (50) montiert ist und dazu noch verkeilt ist über das Schlüsselloch (61) und dem Schlüssel (60), eine Vielzahl der genannten rechten Zugrollen (56), die frei an der genannten Antriebsgelenkwelle (48) montiert ist, das mit einem Außengewinde versehenen Ende (49) der genannten Antriebsgelenkwelle (48), die ein wenig lose in die genannte mit einem Innengewinde versehenen Bohrung der genannten freien Verbindungsrolle (51) aufgeschraubt ist, Zugstifte (57), die mit den Felgen der nächsten genannten Zugrollen (56) verbunden sind, und die genannte ersteingesetzte Rolle (56), die über dem Schlüssel (60) und dem Schlüsselloch (61) mit der genannten Antriebsgelenkwelle (48) verkeilt ist.

2. Das Hochleistungsgetriebe gemäß Anspruch 1, worin die genannten linken, rechten Zugrollen (11, 11') der genannte Kraftpunktrolle (19), und die Kraftpunktrollen (30, 30'), die je links, rechts Zugstiftbohrungen (15, 15', 36, 31, 31) an den Felgen in einer entgegengesetzten Richtung zu den genannten Zugstangen (13, 13') haben; die genannten Zugstangen (13, 13'), die je Stifte (14, 14') haben, die sich in einem rechten Winkel gegenüber den genannten Zugstiftbohrungen (15, 15', 36, 31, 31) ausdehnen, um einzuhacken; und das genannte angetriebene Glied der linken Kurzschlussspule (34) hat eine Montage von einer Zugstange/ Stift (35), die im sich gleichen rechten Winkel wie oben ausdehnt; die genannte Zugstifte (14, 14', 35), die in die genannten Zugstiftbohrungen (15, 15', 31, 31') eingefügt sind und über eine Schraubenbohrung (37, 16) befestigt sind und Schrauben (38, 17), um die genannten Zugstangen zum sauberem und sicherem Ziehen der Felgen der genannten Zugrollen (11, 30, 30') zu verursachen.

3. Hochleistungsgetriebe eines Autos mit einem eingebauten Verbrennungsmotor mit einem Rad und Achse potentielle Energie, um eine Motorenleistung zu erhöhen, das durch die perfekte Verbrennung eines dünnen Gemisches von Benzin und Luft und durch die Emission von ein wenig verschmutzten Gases, um die Autoräder völlig und glatt zu bedienen, und um eine Übersetzung eines Synchrongetriebetyps zu berechtigen, um automatisch zu bedienen und durch Trägheit im Freilauf zu fahren einschließlich: einer Verbindungsstange (70), einer Kurbelwellenmontage (71), eines Lagerzapfen (75)/ Schwungradmontage(90), einer Übersetzung eines Synchrongetriebetyps (101), und einer halbfreitragender Hinterachse (150)/ Zugbremstrommel (151)/ Antriebsradmontage (153) von denen: genannte Verbindungsstange (70)/ Kurbelwellenmontage (71) bestehend aus einer Vielzahl von Verbindungsstangen (70) und der genannten Kurbelwelle (71), die ein Lagerzapfen (75), Kurbelarme (76), Tangenten-Ventilstoßstange (77), Kurbelzapfen (78), die jeweils Kontraktionsfedersätze (74), und Spanngewichte (79) belasten, die charakterisiert sind durch genannte Kurbelarme (76), genannte Tangenten-Ventilstoßstange (77), und genannte Spanngewichte (79), die jeweils in einer Platte geformt sind, getrennt durch einen Spalt, um ohne Vibrationen und Geräusche in der Luftschicht zu rotieren und vor Schwunggradeffekte zu schützen; die genannten Kurbelarme (76), die sich seitlich und tangential von den genannten Lagerzapfen (75) ausdehnen durch einen Spalt in die Breite weniger als der Radius von den genannten Lagerzapfen (75) gegenüber einem Punkt von der Scheibenfelgein einem Winkel gegenüber des genannten Kurbelzapfens (78), um das genannte große Ende (72) dazu zu bringen das offene Ende der genannten Kurbelarme in Ausdehnungshub zu drücken in Richtung einer Umdrehungsrichtung und den genannten Lagerzapfen (75) dazu zu bringen in Saugwirkung, Pressung und Anlasshub leicht zu rotieren, das genannte große Ende durch den genannten Kurbelarm (76) hoch und runter ziehen; die genannte Tangenten-Ventilstoßstange (77), die in entgegengesetzter Richtung von dem offenen Ende des genannten Kurbelarms (76), in einer Halbmondform, durch einen Spalt auf einer Seite in eine enge Weite am Ende in Richtung des genannten Kurbelzapfens (78) ausgedehnt ist und integrierend mit den genannten Kurbelzapfen verbunden ist, um das genannte große Ende dazu zu bringen den genannten Kurbelzapfen und die genannte Tangenten-Ventilstoßstange in Richtung einer Rotationsrichtung zu drücken; die genannten Kurbelzapfen (78) der genannten Kurbelwelle (71), die wie zuvor rotierend montiert sind mit dem genannten großen Ende und verbunden sind mit Tap - Bolzen (80) und Muttern (81), um die genannte Kurbelwelle (71) dazu zu bringen, einfache reibungslose Drehung zu leisten mit wenig Eingangsenergie aber einer Leistung auszuüben, die größer ist als die Eingangsenergie; Montage des genannten Lagerzapfens (75)/ Schwungrads (90) bestehend aus dem genannten Lagerzapfen (75), Lagerzapfenflansch (96), Schwungrad (90) und Zugstange (97) mit dem genannten Lagerzapfen, der ein mit einem Außengewinde versehenem Bosse am Ende, um das genannten Schwungrad lose zu halten und ein Pilot Lager Gehäuse (95) in der Mitte der genannten Bosse (94); der genannte Lagerzapfenflansch (96), der eine Vielzahl von Zugstangen (97) hat, dehnt sich tangential von dem genannten Flansch (96) in entgegengesetzter drehender Richtung aus in Richtung Punkte vom Felgen vom genannten Schwungrad (90), und Zugstifte (98), die jeweils im rechten Winke vom offenen Ende der genannten Zugstangen (97) ausdehnen, um in die Felge des genannten Schwungrads einzuhacken; das genannte Schwungrad (90), das eine mit einem Innengewinde versehenen Nabenbohrung (91) hat, um die genannte Lagerzapfenbosse (94) frei und sicher zu montieren und Zugstangenrillen (92) und Zugstiftbohrungen (93) entlang der gegenüberliegenden Seiten des genannten Schwungrads (90); der genannte Lagerzapfenflansch (96), der montiert und verkeilt ist mit dem Ende des genannten Lagerzapfens (75), ein Pilot Lager (nicht angezeigt), das in genanntem Pilot Lager Gehäuse geladenist (95), das genannte Schwungrad (90), das frei montiert ist mit der genannten mit einem Außengewinde versehenen Bosse (94) durch die genannte mit einem Außengewinde versehenen Nabenbohrung (91), die genannte Zugstange (97) und Stifte (98), die in den genannten Rillen (92) und in den genannten Zugstiftbohrungen (93) liegen und der genannte Nabenzapfenflansch (96), das mit dem Lagerzapfen verkeilt ist, um den genannten Lagerzapfenflansch dazu zu bringen, die Rotation des genannten Schwungrads (90) zu erleichtern; die genannte Übersetzung des Synchrongetriebetyps verschiedener Größen (101) bestehend aus einem Satz von einer Hauptantriebswelle mit verschiedener Größe von Gängen (102), Verschiebungswelle (104), Keilwellennuten (106), Antriebskupplungsgestänge (108), angetriebenes Kupplungsgestänge (107), Hauptantriebswellenmotor-Bremsmechanismus (105), Hauptantriebswellenrückwärtsgang (109), Zwischenwelle, Gänge in verschiedenen Größen (112), die einzeln frei mit Zähnen montiert sind, mit denen die genannten Hauptantriebswellengängen (102) ineinandergreifen, automatischen Kupplungssätzen (114), Zwischenwellenmotor-Bremsmechanismus (110), Zwischenwellenrückwärtsgang (111), mit den genannten automatischen Kupplungssätzen (114), die zwischen den genannten Zwischenwelle (113) und den genannten Zwischenwellengängen (112) gekoppelt sind, die genannten automatischen Kupplungssätze (114), die ein Kupplungsmittel in einheitlichen Größen enthalten, um sie dazu zu bringen, nicht einzukuppeln oder zu entkuppeln von den genannten Zwischenwellengängen (112) im Leerlaufgeschwindigkeit wenn ein Gaspedal gedrückt oder freigesetzt ist, um dem Motor zu erlauben im Leerlauf zu laufen ohne das ein Kupplungspedal gedrückt wird, den Antriebsrädern zu erlauben im Freilauf zu fahren durch Trägheit, oder den Antriebsrädern zu erlauben, gebremst zu werden ohne das Kupplungspedal zu drücken aber sie dazu zu bringen in die genannten Zwischenwellengänge (112) einzukuppeln beim Beschleunigungsgeschwindigkeit für eine automatische Übersetzung wenn das Gaspedal gedrückt wird, um nur einem Kupplungssatz (114) zu erlauben wechselnd einer der genannten Zwischenwellengänge zu fahren während andere Sätze (114) nicht gekuppelt oder entkuppelt mit den genannten Zwischenwellengänge gemäß der Motorgeschwindigkeiten und Übersetzungsverhältnisse oder einzukuppeln mit dem laufenden Zwischenwellengang (112), um die Geschwindigkeiten nach dem Freilaufen aufzunehmen wenn das Gaspedal wieder gedrückt wird; halbfreitragende Hinterachs- (150)/ Zugbremstrommel- (151)/Antriebsradmontage (153) bestehend aus einer halbfreitragender Hinterachse (150), ein Hinterachsenflansch (154), Bremsbacke (152), Zugbremstrommel (151), freies Verbindungsflansch (155) und Antriebsrad (153),
mit der genannten Hinterachse (150), das an einem Ende kurz geschnitten ist, verbunden mit einem Differentialgetriebe durch die Breite des genannten freien Verbindungsflansch (155) vor dem genannten Hinterachsenflansch (154) und groß ausgedehnt ist vom genannten Hinterachsenflansch (154), um eine Hinterachsenbosse zu formen (156), die mit einem Außengewinde versehen ist, um den genannten freien Verbindungsflansch (155) frei und sicher zu unterstützen; der genannte freie Verbindungsflansch (155), der darin eine weite Nabenbosse (157) mit einer Bohrung mit Außengewinde hat und eine Vielzahl von im Zwischenraum angeordneten Nabenbolzenbohrungen (159) um die genannte Nabenbosse (157), um das genannte Antriebsrad (153) und eine Kraftpunktfelge (165) radial genauso lang an einen Antriebsradbasis mit einer Vielzahl von im Zwischenraum angeordneten Felgenbolzenbohrung (158) zu halten; die genannte Zugbremstrommel (151), die eine Vielzahl von Zugstangen (160) hat, die tangential von der Nabe der genannten Bremstrommel (151) hinausragen, ist durch einen Spalt geteilt in einer geringeren radialen Breite des genannten Hinterachsenflansch (154) zu den im Zwischenraum angeordneten Felgenbolzenbohrungen (158) des genannten freien Verbindungsflansches (155) und hat dicke Zugstangenbolzenbohrungen (161) an den offenen Enden; die genannte Zugbremstrommel (151), die am genannten Hinterachsenflansch montiert ist und dazu noch fixiert ist über kurze Nabenbohrungen (166), Trommelnabenbolzenbohrungen (163) und Muttern (167); der genannte freie Verbindungsflansch (155) mit einem Außengewinde ein wenig lose montiert am genannten mit einem Außengewinde versehenen Hinterachsenbosse (156); in dieser Lage die genannten Zugstangenbolzen (170) bringt man an den genannten Bolzenbohrungen (161) der genannten Zugstangen (160) und an die genannten Felgenbolzenbohrungen (158) des genannten freien Verbindungsflansches (155) und werden fixiert mit Unterlegscheiben (171) und Mutter (169); Nabenbohrungen (168), die fest verbunden mit den genannten Nabenbolzenbohrungen (159) des genannten freien Verbindungsflansches (155); die genannten Antriebsräder (153), die mit den genannten Nabenbolzen (168) durch die Nabenbolzenbohrungen (164) der genannten Antriebsräder (153) fixiert sind.

4. Das Hochleistungsgetriebe gemäß Anspruch 3 worin die genannten automatischen Kupplungssätze (114) bestehend aus Außenringen (115), Innenringen (116), Rollenkäfigen (118), Naben (117), Übersetzungsnocken (122, 122', 131), und großen Zugfedern in einheitlicher Größe für eine einheitliche Tätigkeit; die genannten Außenringe (115), die jeweils Sperrrastenbohrungen haben, um die Seiten der genannten Zwischenwellengänge (112) für die Co-Rotation zu befestigen;
Es benötigt sich, gebremst zu werden, nur das Bremsenpedal soll ohne das gedrückt werden, weil die großen spannungsfeder sich zum Normalstand zurückkehren wollen
die genannten oberen und unteren angetriebenen Nockenglieder (122, 122'), die jeweils belastet werden in den genannten oberen und unteren angetriebenen Gliedergehäusen (120, 120'), Stiften (125, 125' und Büchsen (124, 124'), die eingefügt sind in die genannten oberen und unteren Stiftbossebohrungen (121, 121') und Stiftbohrungen (123, 123') und fixiert sind Sicherungsringen (126, 126'); während die genannten kleinen Zugfedern (130), die jeweils stark beansprucht eingehakt sind in die genannten Federbolzen (129, 129') in den genannten Federrillen (128, 128') mit dem genannten anderen Ende (127), das am genannten anderen Ende (127'); die genannten Antriebsnockenglieder (131), die jeweils geneigt sind in die genannten Antriebsnockengliederrillen (132) auf den genannten Naben (117) und dazu fixiert mit Schrauben und Schraubbohrungen (133); die genannte Nabe (117), die jeweils in der Mitte der genannten Innenringen liegen; die genannten Zugfedern (135), die verbunden sind zwischen dem genannten Innenringe (116) und den genannten Naben (117) durch die genannten großen Federrillen (136), Federbolzen (137), die genannten Nabenfederrillen (138) und Nabenfederbolzen (139); die genannten Kupplungssätze (114), die jeweils angebracht sind an den Seiten der genannten Zwischenwellengänge (112) durch die genannten Außenringe (115) über Sperrrasten und Sperrrastenbohrungen (144); Flansche (140) und die genannten Zwischenwellengänge (112)/ Kupplungssätze (114) vereinigt, wechselnd eingefügt an der genannten Zwischenwelle (113) und den genannten Flansche (140), die verkeilt sind mit der genannten Zwischenwelle (113) über Schlüsseln (141) und Schlüssellöcher (142), um zu vermeiden, dass die Zwischenwellengänge axial wegrutschen und dann die genannte Montage der Zwischenwellengänge (112)/ Kupplungssätze (114), die angebracht sind an den genannten Flansche (140) mit ihren Zähnen, die mit denen der genannten Haupantriebswellengänge (102) und der genannten Naben (117), die verkeilt sind mit der genannten Zwischenwelle über Schlüsseln und Schlüssellöcher (146) für saubere automatische Kupplungsoperationen.

5. Hochleistungsgetriebe eines Fahrrads mit einem Rad und Achsen potentielle Energie, dass das Pedaltreten bei einem Fahrrad, bestehend aus einem Pedalzwischenwelle (180), Kettengangmontage (185) und freie Gänge an einem Hinterrad, vereinfacht von denen die genannte Zwischenwellen-/ Kettengangmontage (185), die aus linken und rechten Pedalkurbelarmen (181, 181'), Tangenten-Ventilstoßstange (182, 182'), linken und rechten Halterungen (183, 183'), Lagerzapfen (184), Hebelsatz (188) und Kettengang (185), charakterisiert dadurch, dass die genannten linken und rechten Kurbelarme(181, 181'), die jeweils lang genug verlängert sind, um nicht den Boden und den Kotflügel am Vorderrad zu berühren für eine leichte Rotation; die genannten linken und rechten Tangenten-Ventilstoßstange (182, 182'), die sich vom offenen Ende der Kurbelarme (181, 181') rückwärts von der Rotationsrichtung anbiegen und verlängern in einem scharfen Winkel dorthin, wo gewöhnlich Pedalkurbelarme enden und Pedale am Ende montiert sind, so dass das Pedaltreten beim Fahrrad es zu einer Rotationsrichtung drückt; die genannten linken und rechten Halterungen (183, 183'), die mit Draht befestigt sind und verbunden zwischen der Nabenende der genannten Kurbelarme (181, 181') und das Pedalende der genannten Tangenten-Ventilstoßstange (182, 182'), um die genannte Tangenten-Ventilstoßstange vor dem Bruch zu schützen; der genannte Kettengang (185), das ein weites Kettengangnabenbosse (186) hat; der genannte Hebelsatz (188), das ein Hebelnabenbosse (189) hat mit einer Hebelnabenbohrung, um frei zu montieren am genannten Kettengangnabenbosse (186), U-geformt, starre Montage der Kraftpunktstange/ elastischen Zugstange (193) mit einem Kraftpunktstange (191), die in einem linken, radialen Breite von der genannten Hebelnabenbosse (189) so lang wie der genannte verlängerter Kurbelarm (181') verlängert wird und der genannte Zugstange (192), die am Ende der genannten Kraftpunktstange (191)gekrümmt wird und verlängert wird bis zum genannten Nabenbolzen (196) des genannten rechten Kurbelarms, um zu verbinden dazu um den genannten Nabenbolzen (196) zu erlauben, ein Kraftpunkt durch die genannte Zugstange (192), und ein U-förmige, getrennte Montage der Zugstange/ Kraftpunktstange (195) zu ziehen, die tangential in einem rechten radialen Breite von der genannten Hebelnabenbosse (189) zu verlängern so weit wie die genannte Kraftpunktstange/ Zugstange (193) und lang genug zurück zu verbiegen, um an zwei Stellen der radialen Oberfläche des genannten Kettengangs (185) zu verkuppeln; der genannte Hebelsatz (188), der am genannten Kettengangnabenbosse (186) frei durch die genannte Hebelnabenbosse (189) montiert ist und die Kraftpunktstange der genannten getrennten Montage der Zugstange/Kraftpunktstange (185), geschweißt an den zwei Stellen der Oberfläche des genannten Kettengangs (185); die genannte Kettengangnabenbosse (186), die frei am genannten Lagerzapfen (184) auf der rechten Seite montiert ist, die genannten linken und rechten Pedalkurbelarme (181, 181'), die an beiden Enden des genannten Lagerzapfens (184) und am offenen Ende der genannten Montage der Kraftpunktstange/ Zugstange (193), die mit Muttern (197) fixiert ist am genannten Nabenbolzen (196) durch die Bolzenbohrung (194);
die genannte Montage der freien Gänge (200)/ Hinterrad (201) besteht aus freien Gängen, Schaltrad Innenring (203), Flansch (204), vier Zugspeichen (207), Gleichgewichtsspeichen (208) und Hinterrad (201) mit dem genannten Schaltrad Innenring (203), das den genannten Flansch (204) hat, angebracht am Felgen mit einer Vielzahl von im Zwischenraum angebrachten Zugspeichenbohrungen (205) und einer Vielzahl von Gleichgewichtsspeichenbohrungen (209), die um deren Felgen geformt sind, um die Enden der genannten Zugspeichen (207) und der genannten Gleichgewichtsspeichen (208) einzuhaken; eine Vielzahl der genannten Zugspeichen (207) und der genannten Gleichgewichtsspeichen (208), die unter den gewöhnlichen Speichen ausgesucht wurden, die davor verbunden waren und eingehakt in die genannten Flansche (204) an den einen Enden bevor der genannte Innenring (203), der leicht lose an einem Hinterradwelle (202) verschraubt wurde, und an den anderen Enden (mit einem Außengewinde versehen) der genannten Zugspeichen (207), die in die Radfelgenspeichenbohrungen (210) entgegengesetzt tangential zu dem genannten Flansch (204) verschraubt wurde, um als Tangenten-Zugstange zu dienen und die anderen Enden der genannten Gleichgewichtsspeichen (208), die in die genannten Radfelgenspeichenbohrungen (210) vorwärts tangential zum genannten Flansch (204) geschraubt wurde, um mit dem genannten Hinterrad das Gleichgewicht zu halten und sich zu drehen (201).

## Revendications

1. Le moto électrique de train de haute puissance utilisant une roue et l'énergie potentielle d'essieu pour survolter un moteur fait non seulement un générateur de grande capacité produire une énergie électrique d'appui automatique mais aussi les roues marcher contenant; essieu de moteur gauche(10)/ poulies de traction gauches(11)/ embrayage de résistance variable électro-magnétique(RVEM) gauche(27)/ poulies de traction gauches(11)/ poulie de point-force(19)/ essieu de générateur droit(43'); essieu de moteur droit(10')/ poulies de traction droites(11')/ embrayage de RVEM droit(27')/ assemblage d'arbre d'hélice d'entraînement(48); arbre d'hélice d'entraînement(48)/ poulie de traction droite(56)/ poulie de joint libre(51)/ ardre d'hélice entraîné(50); ventilateur de refroidissement(22)/ assemblage de l'essieu de moteur de gauche(10) et un ventilateur de refroidissemant(22)/ assemablage de l'esseiu de générateur gauche(43) **caractérisé** comme suivant -une pluralité de poulies de traction gauches et droites(11, 11') chacun ayant moyeux(12,12') pour servir un point de poids de levier, une longue jante circulaire radialement pour servir un point-force et réduire la résistance d'air et les bruits en rotation rapide; une pluralité de bielles élastiques de traction (13,13') avançant tangiblement du moyeu susdit(12,12') vers la direction gauche ou droite à d'autres jantes de poulie de traction pour tirer les jantes de poulies de traction(11,11') avec l'effort employé au point de poids; point-force susdit(19) ayant la même poulie longue et circulaire que celles de traction susdit (11,11'); embrayages de RVEM gauches et droits(27,27') contenant les dispositifs d'entraînement(28,28') ayant chaque âme de bobine excitée gauche et droite(29, 29') avançant tangiblement des moyeux et poulies de point-force(30,30') étant intégral avec les moyeux desdispositifs d'entraînement(28, 28') pour être aisément tiré par jante; et dispositifs entraînés gauches et droits(34, 34') ayant chaque perche courte de bobine gauche et droite(44, 44') donnant directement sur les âmes de bobine excitées susdites(29,29') pour attraction facile, et dispositif entraîné gauche susdit(34) ayant un assemblage de bielle/axe fixe élastique de traction(35) avançant trangiblement des moyeux de dispositifs entraînés susdits(34) pour accoupler la jante de côté de poulies de traction susdite(11);poulies de traction gauche et droite susdites(11,11') et dispositifs entraînés susdits(28,28') monté libre sur les essieux gauche et droit susdits(10,10'), les poulies de traction de primières-insérées susdites(11,11') accordées aux essieux susdits(10,10'), les embouts d'ouverture de bielles de traction susdits(13,13') accordés solidemment aux jantes de poulies susdites(15,15') de côté de poulies de traction(11,11') pour survolter un débit de moteur; poulies de point-force susdites(19), poulies de traction gauches susdites(11), et dispositif de bobine courte entraîné susdit(34) monté libre sur l'essieu de générateur droit lié à l'âme de bobine excitée susdite(29), bielles de traction de sable(13) connectées à la jante de côté des poulies de traction susdites(11) et poulie de point-force susdite(19), et poulie de point-force susdite(19) accordées aux essieux de générateur droits susdits(43) pour embrayer ou plus augumenter le rendement survolté à opérer l'essieu de générateur susdit(43); et dispositif entraîné droit susdit monté sur et accordé à l'arbre d'hélice entraîné susdit(48) à embrayer et faciliter l'arbre d'hélice susdit(48) à tourner plus aisément; le ventilateur de refroidissement susdit(22) ayant un moyeu(23) pour fixer à l'essieu susdit(10,43) et les branches d'hélice avançant à peu près 40 degrées vers la direction en avant de la direction inverse de la tangente de l'essieu susdite(23) moins que la largeur radiale de l'essieu susdit(23) vers la direction inverse, pour que les essieux tournent, tirant les branches d'hélice susdites(24) obliquement; ventilateur de refroidissement susdit monté sur et accordé aux essieux susdits(10,43) pour la rotation facile;
l'arbre d'hélice entraîné susdit(48) et l'arbre d'hélice entraîné susdit(50) étant divisés pour ne pas transmettre la puissance directement à la différence de l'arbre d'hélice conventionel, l'arbre d'hélice entraîné(48) susdit(48) ayant l'embout mâle-fileté(49), et poulie de joint libre susdite(51) ayant un essieu large(52) avec un calibre non fileté à un côté pour joindre rigidement à l'arbre d'hélice entraîné susdit(50) et un calibre femâle-fileté(54) à un autre côté pour joindre un peu lâchement à l'embout mâle-fileté susdit(49) et ayant un calibre de bielle de traction(55) sur jante; poulies de joint libre de sâble (51) à moitié monté sur l'embout de l'arbre d'hélice entraîné susdit(50) à travers le calibre non fileté susdit(53) et accordé via le guichet(61) et le clé(60), une pluralité de poulies de traction de droites(56) montées libre sur l'arbre d'hélice d'entraînement susdit(48), l'embout mâle-fileté susdit(49) de l'arbre d'hélice d'entraînement susdit(48) vissé un peu lâchement dans le calibre femâle-fileté susdit(54) de la poulie de joint libre susdite(51), axes fixes de traction(57) couplées les jantes des poulies de traction de côté(56), et poulies premières-insérées susdites(56) accordées à l'arbre d'hélice d'entraînement susdit(48) via le clé(60) et le guichet(61).

2. Le train de haute puissance accordant à la réclamation1 dans lequel les poulies de traction gauche et droit susdites(11,11'), poulies de point-force susdites(19), poulies de point-force susdites(30,30') chacun a les calibres d'axe fixe de traction gauche et droit(15, 15', 36, 31, 31') sur les jantes à la direction inverse des bielles de traction susdites(13,13'); bielles de traction susdites(13,13') chacun a les axes fixes(14,14') étendant à l'angle droit vers les calibres d'axe fixe de traction susdits(15,15', 36, 31, 31') pour accrocher dans; et dispositif d'entraînement de bobine courte gauche susdit(34) a un assemblage de traction de bielle/axe fixe(35) étendant au même angle droit que le dessus; axes fixes de traction susdits(14,14' 35) insérés dans les calibres d'axe fixe de traction susdits(15,15',31,31') et fixés via les calibres de vis(37,16) et les vis(38,17) pour faire les bielles de traction susdites(13,13',35) tirer les jantes de poulies de traction susdites(11,30,30') proprement et solidemant.

3. Le train de haute puissance de l'auto-engin de combustion interne par une roue et l'énergie d'axe potentiel pour survolter un débit d'engin produit par la combustion parfaite d'un mélange légère du gazolène et de l' air et par l'émission du gaz un peu pollué pour opérer les roues parfaitement et doucement, et mettant en état d'une transmission de type du train de prise constante pour opérer automatiquement et faire roue libre par contenir l'inertie; bielles de connection(70), assemblage de l'arbre de manivelle(71), assemblage de maneton(75)/volant-moteur(90), transmission de type du train de prise constante(101), et arbre arrière semi-flottant(150)/ tambour de frein de traction(151)/ assemblage de roues de poussée(153), dont: bielles de connection susdites(70)/ assemblage de l'arbre de manivelle contenant une pluralité de bielles de connection(70) et l'arbre de manivelle susdit(71) ayant le tourillon de manivelle(75), bras de manivelle(76), bielle de tangente(77), axes fixes de manivelle(78) chargeant chaque assemblage de ressort contract(74),et les masselottes d'équilibrage(79), **caractérisés** comme suivant bras de manivelle susdit(76), bielles de poussée de tangente susdites(77), et masselottes d'équilibrage(79) chacun étant formé dans une disque, divisé par fente, pour tourner sans vibrations et bruits dans l'espace d'air et protéger les effets de volant-moteur; bras de manivelle susdit(76) protégeant latéralement et tangiblement du tourillon de manivelle(75) par fente moins large que le rayon du tourillon de manivelle susdit(75) vers un point de la jante de disque à l'angle abusif vers de l'axe de manivelle susdit(78), pour faire le grand embout susdit(72) pousser dans coup de l'expansion l'embout d'ouverture de bras de manivelle susdit(76) vers la direction rotative, et pour faire le tourillon de manivelle susdit(75), dans succion, compression, et coup d'épuisement, tourner aisément, tirant le grand embout(72) en bas et en haut à travers le bras de manivelle susdit(76); bielle de poussée de tangente(77) étendant inversement de l'embout d'ouverture du bras de manivelle susdit(76), dans la forme demi-lune, par fente à un côté, dans la petite largeur à l'embout vers l'axe de manivelle susdit(78), pour faire le grand embout susdit pousser l'axe de manivelle susdit et la bielle de poussée de tangente vers la direction rotative; les axes de manivelle susdits(78) de l'arbre de manivelle(71) avec rotation montés par le grand embout susdit comme avant et accordés par les boulonners de robinet et les écrous(81), pour faire l'arbre de manivelle susdit(71) effectuer la rotation douce et facile avec une légère puissance d'entrée mais employant plus grande puissance de sortie que la puissance d'entrée;
tourillon de manivelle susdit(75)/ assemblage de volant-moteur(90) contenant le tourillon de manivelle susdit(75), flasque de tourillon(96), volant-moteur(90) et bielles de traction(97) avec le tourillon de manivelle(75) ayant un moyeu de mâle-fileté (94) à l'embout pour prendre le volant-moteur susdit lâchement, et une boîte de roulement pilote(95) dans le centre du moyeu susdit(94); flasque de tourillon susdit(96) ayant une pluralité de bielles de traction(97) avançant tangiblement du flasque susdit(96) aux directions de rotation inverse et opposée vers les points de la jante du volant-moteur susdit(90), et les axes de traction(98) chacun étendant à l'angle droit de l'embout d'ouverture des bielles de traction susdit(97) pour accrocher dans la jante du volant-moteur susdit(90); volant-moteur susdit(90) ayant un calibre femâle-fileté(91) pour monter sur le moyeu de tourillon susdit(94) librement et fortement, et les rainures de bielle de traction(92) et les calibres d'épingle de traction(93) tout le long de côtés opposés du volant-moteur susdit(90); le flasque de tourillon susdit(96) étant monté et accordé à l'embout du tourillon de manivelle susdit(75), un roulement pilote(pas montré) chargé dans une boîte de roulement pilote susdite(95), volant-moteur susdit(90) monté libre sur le moyeu mâle-fileté susdit(94) à travers le calibre fileté susdit(91), bielle de traction susdite(97) et axes(98) placés dans les rainures susdits(92) et calibres d'axe de traction susdits(93), et flasque de tourillon susdit(96) accordés au tourillon de manivelle susdit pour faire le tourillon de manivelle susdit faciliter la rotation du volant -moteur susdit (90) aisément; la transmission du type différent de taille et du train de prise constante automatique susdite(101) contenant un assemblage des trains de taille différente de l'arbre principale(102) monté libre sur un arbre principale, arbre de déplacer, nervures(106) ,engrenage d'embrayage d'entraînement (108), engrenage d'embrayage entraîné(107), timonerie de frein d'engrenage de l'arbre principale(105), engrenage arrière de l'arbre principale(109), arbre de renvoi, engrenage de taille différente(112) individuellement montés libre avec le pignon d'entraînement à chaîne engrené avec ceux de l'engrenages de l'arbre principale susdit(102), ensemble d'embrayage automatique(114), timonerie de frein d'engrenage par l'arbre de renvoi(110), engrenage inverse de l'arbre de renvoi(111), avec l'emsemble de l'embrayage automatique susdit(114) étant couplé entre l'arbre de renvoi susdit(113) et l'engrenage de l'arbre de renvoi susdit(112), l'emsemble de l'embrayage automatique(114) contenant les milieux d'embrayage dans la taille uniforme pour ne pas faire les embrayer ou débrayer de l'engrenages d'arbre de renvoi susdits(112) à la vitesse de rotation du moteur de ralenti quand une pédale d'accélérateur est desserrée ou relâchée, pour faire l'engin fontionner ralenti sans une pédale d'embrayage étant baissé, pour faire les roues de poussée faire roue libre par inertie, ou pour faire les roues de poussée être freinées sans la pédale d'embrayage étant baissée, mais faisant les embrayer à l'engrenages de l'arbre de renvoi susdits(112) à la vitesse d'accélération pour la transmission automatique quand la pédale d'accélérateur est serrée, pour faire seulement un ensemble d'embrayage(114) conduire alternativement un des engins de l'arbre de renvoi susdit(112), mais ne pas faire d'autres ensembles embrayer à ou débrayer des engrenages de l'arbre de renvoi susdits accordant à la vitesse de rotation du moteur et coefficients d'engrenage, ou embrayer à l'engrenage de l'arbre de renvoi courant(112) pour résumer la vitesse après faire roue libre, quand la pédale de l'accélérateur est préssée encore une fois;
arbre arrière semi-flottant susdit(150)/ tambour de frein de traction(151)/ ensemble des roues de poussé(153) contenant un arbre arrière semi-flottant(150), un flasque de l'arbre arrière (154), sabot(152), tambour de frein de traction(151), flasque de joint libre(155) et roue d'entraînement(153), avec l'arbre arrière susdit(150) étant coupé courte par un embout connecté à un engrenage différentiel par la largeur du flasque de joint libre susdit(155) en face du flasque de l'arbre arrière susdit(154) et étendé par celui du flasque de l'arbre arrière susdit(154) pour former un moyeu de l'arbre arrière(156) étant mâle-fileté pour supporter le flasque de joint libre susdit(155) librement et solidement; flasque de joint libre susdit(155) ayant un grand moyeu(157) avec un calibre fileté(162) dedans et une pluralité de calibres de boulonner de moyeu espacé(159) autour du moyeu susdit(157) pour prendre la roue de poussée(153) et une jante de point-force(165) radialement autant qu'une base de roue de poussée avec une pluralité de calibre de boulonner de la jante espacée(158); tambour de frein de traction susdit(151) ayant une pluralité des bielles de traction(160) avançant tangiblement du moyeu du tambour de frein susdit(151), divisé par fente, dans une largeur moins radiale du flasque de l'arbre arrière susdit(154) aux calibres de boulonner de la jante espacés(158) du flasque de joint libre susdit(155) et ayant les calibres de boulonner de la bielle de traction épaisse(161) aux embouts d'ouverture; tambour de frein de traction susdit(151) étant monté sur le flasque de l'arbre arrière susdit(154) et fixé via boulonners de moyeu court(166), calibres de boulonner de moyeu de tambour(163) et écrous(167); flasque de joint libre susdit(155) avec fileté monté sur le moyeu de l'arbre arrière de fileté susdit(156) seulement un peu lâchement; dans cet état, boulonners de bielles de traction susdit(170) entre dans les calibres de boulonner susdits(161) du flasque de joint libre susdit(155) et fixé via les rondelles(171) et les écrous(169); boulonners de moyeu(168) associés solidement aux calibres de boulonner de moyeu susdit(159) du flasque joint libre susdit(155); roues de poussée susdites(153) fixées aux boulonners de moyeu susdit(168) à travers les calibres de boulonner de moyeu(164) des roues de poussée susdites(153).

4. Le train de haut puissance s'accordant à la réclamation 3 dans laquelle ensembles d'embrayage automatique susdits(114) contenant les bagues extérieurs de roulement(115), bagues intérieures de roulement(116), cages de galets(118), moyeux(117), cames de translation(122,122',131), et grands ressorts à tension(115) dans les tailles uniformes pour l'opération uniforme; bagues extérieures susdites(115) ayant chaque calibre de broche à ergot(144) pour fixer aux côtés des engrenages de l'arbre de renvoi susdits(112) pour co-rotation ont besoin d'être freinés, seulement la pédale de freinage doit être baissée sans la pédale d'embrayage étant baissée pendant que les ressorts de grande tension retourneront normalement;
les dispositifs de came entraînés en haut et en bas susdits(122,122') chacun étant chargé dans les boîtes de dispositifs entraînées en haut et en bas susdites(120,120'), axes fixes(125,125') et douilles lisses(124,124') insérés dans les calibres de moyeu d'axe fixe en haut et en bas susdits(121,121') et calibres d'axe fixe(123,123') et fixé avec jonc à ergots(126,126'); pendant les petit ressorts à tension(130) chacun forcément accordé aux chevilles de ressort susdites(129,129') dans les rainures de ressort susdites(128,128') avec d'autre embout susdit(127) montant à un autre embout susdit(127'); dispositifs de came de poussée susdits(131) chacun disposé dans les rainures de dispositif de came de poussée susdites(132) sur moyeux susdits(117) et fixé à cela via vis(134) et calibre de vis(133); moyeu susdit(117) chacun placé dans le centre des bagues intérieures de roulement susdites(116); grands ressorts de tension susdits(135) connectés entre les bagues intérieures de roulement susdites(116)et moyeux susdits(117) à travers les grandes rainures de ressort susdites(136), chevilles de ressort(137), rainures de ressort de moyeu susdites(138) et chevilles de ressort de moyeu(139); ensembles d'embrayage susdits(114) chacun attaché aux côtés des engrenages de l'arbre de renvoi susdifs(112) à traves les bagues extérieures de roulement(115) via broches à ergot(143) et calibres de broche à ergot(144); flasques(140) et les engrenages de renvoi(112)/ensembles d'embrayage(114) combinés alternativement étant insérés sur l'arbre de renvoi(113) et les flasques susdits(140) accordés à l'arbre de renvoi(113) via clés(141) et guichets(142) pour protéger les engrenages de renvoi susdits(112) par glisser avec axe, et plus les engrenages de renvoi susdits(112)/ ensembles d'embrayage(114) entre dans le côté des flasques susdits(140) avec leurs pignons maillés avec ceux des engrenages de l'arbre principale susdits(102), et moyeux susdits(117) accordés à l'arbre de renvoi susdit(113) via clés(145) et guichets(146) pour les propre opérations d'embrayage automatiques.

5. Le train de haute puissance de bicyclette par une roue et l'énergie potentelle d'axe fixe pour faciliter à pédaler une bicyclette contenant l'arbre de manivelle de pédale(180), ensemble de réducteur à chaîne(185) et engrenage libre(200) sur une roue arrière(201), dont l'arbre de manivelle de pédale susdit(180)/ ensemble de réducteur à chaîne contient les bras de manivelle droit et gauche(181,181'), bielles de tangente(182,182'), manches(183,183'), tourillon de manivelle(184), appareil à levier(188), et réducteur à chaîne(185), **caractérisé** comme suivant
bras de manivelle droit et gauche(181,181') chacun étant étendu assez long pour ne pas toucher le sol et une garde-boue de roue avant pour la rotation facile; bielles de tangente droit et gauche susdites(182,182') pliées de l'embout d'ouverture de bras de manivelle susdit(181,181') en arrière à la direction rotative et avançant d'un angle aigu haut à ce que le bras de manivelle de pédale conventiennelle est fini et les pédales sont montées sur l'embout, pour que ce que les cyclists pédalent puisse le pousser à la direction rotative; manches droit et gauche susdites(183,183') de fil et couplées entre l'embout de moyeu du bras de manivelle(181,181') et l'embout de pédale de bielles de tangente susdit(182,182') pour protéger les bielles de tangente susdites(182,182') par cassure; réducteur à chaîne susdit(185) ayant un grand moyeu de réducteur à chaîne(186); ensemble de levier susdit(188) ayant un moyeu de levier(189) avec calibre de moyeu de levier(190) pour monter libre sur moyeu de réducteur à chaîne susdit(186) et formé 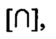 bielle rigide de point-force/ ensemble de bielle élastique de traction(193) avec une bielle de point-force(191) avançant dans la largeur radiale et gauche du moyeu de levier susdit(189) aussi longue que le bras de manivelle allongé susdit(181') et bielle de traction susdite(192) se courvant à l'embout de bielle de point-force susdit(191) et étendant haut au boulonner de moyeu susdit(196) du bras de manivelle droit susdit(181') pour coupler à quoi à faire le boulonner de moyeu susdit(196) tirer un point-force à travers la bielle de traction susdite(192), et la bielle séparée de traction d'une forme 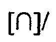 ensemble de bielle de point-force avançant tangiblement dans une largeur radiale du moyeu de levier susdit(189) aussi loins que la bielle de point-force susdite/ bielle de traction(193) et se courbant arrière assez long pour être couplé à deux taches de surface radiale du réducteur à chaîne susdit(185); ensemble de levier susdit(188) monté sur le moyeu du réducteur à chaîne susdit(186) libre à travers le moyeu de levier susdit(189), et la bielle de point-force de la bielle séparée de traction susdite/ ensemble de la bielle de point-force(185) soudé par deux taches à la surface du réducteur à chaîne susdit(185); moyeu du réducteur à chaîne susdit(186) monté libre sur le tourillon de manivelle susdit(184) sur le côté droit, bras de manivelle de pédale gauche et droit(181,181') fixé à l'autre embout du tourillon de manivelle susdit(184), et l'embout d'ouverture du point-force susdit/ ensemble de bielle de traction(193) fixé au boulonner de moyeu susdit(196) à travers le calibre de boulonner(194) avec écrou(197);
les engrenages libres susdits(200)/ ensemble de roue arrière(201) contiennent les engrenages libres(200), bagues intérieures de roulement de roue à cliquet(203), flasque(204), quatre rayons de traction(207), rayons d'équilibrage(208), et roue arrière(201), avec bague intérieure de rouelement de roue à cliquet susdite(203) ayant le flasque susdit(204) attaché à la jante avec une pluralité des calibres de rayon de traction espacés(205) et une pluralité des calibres de rayon d'équilibrage(209) formé autour de sa jante pour accorder les embouts des rayons de traction susdits(207) et des rayons d'équilibrage susdits(208); une pluralité des rayons de traction susdite(207) et les rayons d'équilibrage susdits(208) séléctionnés parmi les rayons conventionnels qui étaient couplés avant et accordés dans le flasque susdit(204) à un embout, avant la bague intérieure susdite(203) étant serrée un peu lâchement sur une broche d'entraînement de roue arrière(202), et les autres embouts(mâle-fileté) des rayons de traction susdits(207) étant serrés dans les calibres de rayon de la jante de roue(210) tangente inverse au flasque susdit(204) pour servir comme bielle de traction de tangente, et les autres embouts des rayons d'équilibrage susdits(208) serrés dans les calibres de rayon de la jante de roue(210) la tangente en avant au flasque susdit(204) pour équilibrer et tourner ensemble avec la roue arrière susdite(201).
